# EUROPEAN PATENT SPECIFICATION

(11) **EP 3 716 564 B1**
(45) Date of publication and mention of the grant of the patent: **16.02.2022**
(21) Application number: 18889772.2
(22) Date of filing: 13.12.2018
(51) Int. Cl.: H04L 29/06, H04W 12/71

(54) **METHOD FOR RESETTING PASSWORD, REQUEST TERMINAL AND CHECK TERMINAL**
VERFAHREN ZUM ZURÜCKSETZEN EINES PASSWORTS, ANFORDERUNGSENDGERÄT UND KONTROLLENDGERÄT
PROCÉDÉ PERMETTANT DE RÉINITIALISER UN MOT DE PASSE, TERMINAL DE DEMANDE ET TERMINAL DE VÉRIFICATION

(30) Priority: 13.12.2017 CN 201711330350; 12.12.2018 CN 201811514952
(43) Date of publication of application: 30.09.2020
(73) Proprietor: HUAWEI TECHNOLOGIES CO., LTD., Shenzhen, Guangdong 518129 (CN)
(72) Inventor: OU, Duanhao, Shenzhen, Guangdong 518129 (CN)
(74) Representative: Gill Jennings & Every LLP
(86) International application number: PCT/CN2018/120815
(87) International publication number: WO 2019/114784

(56) References cited:
- CN-A- 105 868 621
- CN-A- 106 411 517
- CN-A- 106 845 181
- US-A1- 2008 120 508
- GELERNTER NETHANEL ET AL: "The Password Reset MitM Attack", 2017 IEEE SYMPOSIUM ON SECURITY AND PRIVACY (SP), IEEE, 22 May 2017 (2017-05-22), pages 251-267, XP033108097, DOI: 10.1109/SP.2017.9 [retrieved on 2017-06-23]

## Description

### TECHNICAL FIELD

This application relates to the field of identity authentication, and in particular, to a password reset method, a requester, and a verifier.

### BACKGROUND

When a requester (for example, a client) logs in to an application program, the requester usually requests, by using an account and a password, a verifier of the application program to verify an identity. If a user forgets a login password, the user cannot access a corresponding service in the application program. To recover the user's access to the service, a login interface of the requester of the application program needs to provide a function such as "forgot password", "retrieve password", or "reset password" for the user to reset the password corresponding to the account, so as to obtain a new login password for the application program. GELERNTER NETHANEL ET AL: "The Password Reset MitM Attack",2017 IEEE SYMPOSIUM ON SECURITY AND PRIVACY (SP), IEEE, 22 May 2017, pages 251-267, XP033108097,DOI: 10.1109/SP.2017.9, discloses the password reset MitM (PRMitM) attack and shows how it can be used to take over user accounts.

If a password reset mechanism has a defect, it may be utilized by an attacker as a vulnerability of the entire application program. Even if a hacker fails in brute-force cracking on the original password of the user, the hacker may successfully reset the password for the account by utilizing the vulnerability of the password reset mechanism.

Therefore, how to avoid a vulnerability of a password reset mechanism becomes an urgent problem to be resolved.

### SUMMARY

This application provides a password reset method, a requester, and a verifier, to reduce a password reset vulnerability quantity or avoid a password reset vulnerability while ensuring user experience. The invention is defined in independent claims 1, 8 and 15. Further embodiments are defined by dependent claims 2-7 and 9-14.

### BRIEF DESCRIPTION OF DRAWINGS

FIG. 1 is a schematic diagram of a system architecture to which an embodiment of this application is applicable;
FIG. 2 is a schematic flowchart of a password reset method according to an embodiment of this application;
FIG. 3 is a schematic flowchart of a password reset method according to another embodiment of this application;
FIG. 4 is a schematic flowchart of a password reset method according to another embodiment of this application;
FIG. 5 is a schematic diagram of an interface displayed by a requester in a password reset process according to an embodiment of this application;
FIG. 6 is a schematic diagram of an interface displayed by a requester in a password reset process according to another embodiment of this application;
FIG. 7 is a schematic diagram of an interface displayed by a requester in a password reset process according to another embodiment of this application;
FIG. 8 is a schematic diagram of an interface displayed by a requester in a password reset process according to another embodiment of this application;
FIG. 9 is a schematic diagram of an interface displayed by a requester in a password reset process according to another embodiment of this application;
FIG. 10 is a schematic diagram of an interface displayed by a requester in a password reset process according to another embodiment of this application;
FIG. 11 is a schematic diagram of an interface displayed by a requester in a password reset process according to another embodiment of this application;
FIG. 12 is a schematic diagram of an interface displayed by a requester in a password reset process according to another embodiment of this application;
FIG. 13 is a schematic diagram of an interface displayed by a requester in a password reset process according to another embodiment of this application;
FIG. 14 is a schematic diagram of an interface displayed by a requester in a password reset process according to another embodiment of this application;
FIG. 15 is a schematic flowchart of a binding information generation method according to an embodiment of this application;
FIG. 16 is a schematic flowchart of a binding information generation method according to another embodiment of this application;
FIG. 17 is a schematic diagram of an interface displayed by a requester in a password reset process according to another embodiment of this application;
FIG. 18 is a schematic diagram of an interface displayed by a requester in a password reset process according to another embodiment of this application;
FIG. 19 is a schematic diagram of an interface displayed by a requester in a password reset process according to another embodiment of this application;
FIG. 20 is a schematic diagram of an interface displayed by a requester in a password reset process according to another embodiment of this application;
FIG. 21 is a schematic diagram of an interface displayed by a requester in a password reset process according to another embodiment of this application;
FIG. 22 is a schematic diagram of an interface displayed by a requester in a password reset process according to another embodiment of this application;
FIG. 23 is a schematic diagram of an interface displayed by a requester in a password reset process according to another embodiment of this application;
FIG. 24 is a schematic diagram of an interface displayed by a requester in a password reset process according to another embodiment of this application;
FIG. 25 is a schematic diagram of an interface displayed by a requester in a password reset process according to another embodiment of this application;
FIG. 26 is a schematic diagram of an interface displayed by a requester in a password reset process according to another embodiment of this application;
FIG. 27 is a schematic diagram of an interface displayed by a requester in a password reset process according to another embodiment of this application;
FIG. 28A and FIG. 28B are a schematic flowchart of a password reset method according to another embodiment of this application;
FIG. 29 is a schematic flowchart of a password reset method according to another embodiment of this application;
FIG. 30 is a schematic diagram of an interface displayed by a requester in a password reset process according to another embodiment of this application;
FIG. 31 is a schematic diagram of an interface displayed by a requester in a password reset process according to another embodiment of this application;
FIG. 32 is a schematic diagram of an interface displayed by a requester in a password reset process according to another embodiment of this application;
FIG. 33 is a schematic diagram of an interface displayed by a requester in a password reset process according to another embodiment of this application;
FIG. 34 is a schematic diagram of an interface displayed by a requester in a password reset process according to another embodiment of this application;
FIG. 35 is a schematic diagram of an interface displayed by a requester in a password reset process according to another embodiment of this application;
FIG. 36 is a schematic diagram of an interface displayed by a requester in a password reset process according to another embodiment of this application;
FIG. 37 is a schematic block diagram of a verifier according to an embodiment of this application;
FIG. 38 is a schematic block diagram of a requester according to an embodiment of this application;
FIG. 39 is a schematic block diagram of a verifier according to another embodiment of this application; and
FIG. 40 is a schematic block diagram of a requester according to another embodiment of this application.

### DESCRIPTION OF EMBODIMENTS

The following describes technical solutions in this application with reference to accompanying drawings.

It should be understood that embodiments of this application are mainly applied to a system including a requester and a verifier, and the requester needs to request, by using an account and a password, the verifier to verify an identity. After it is verified that the identity is valid, the requester can access a server.

It should be understood that the verifier in the embodiments of this application may be the server. In other words, the verifier and the server are a same device. In this case, the server verifies the requester, and after the server verifies that the identity of the requester is valid, the requester can access the server. Optionally, the verifier may alternatively be a third-party device. In other words, the verifier and the server are two independent devices. In this case, the verifier performs only verification, and only after the verifier verifies that the identity of the requester is valid, the requester can access the server.

It should be understood that the requester in the embodiments of this application may also be referred to as a client. The client may include an electronic device that can request the verifier to perform verification, for example, a mobile phone, a tablet computer, a Personal Digital Assistant (personal digital assistant, PDA), a notebook computer, a smart television, a desktop computer, a point of sale (point of sale, POS) vehicle-mounted device, or a wearable device. The embodiments of this application are not limited thereto. In the embodiments of this application, the requester and the server may form a master-slave architecture. A structural mode of the requester and the server may include a client/server (Client/Server, C/S) mode, a browser/server (Browser/Server, B/S) mode, or the like. The embodiments of this application are not limited thereto.

Optionally, in the embodiments of this application, the server may be another client. In this case, communication between the requester and the server is evolved into peer-to-peer (Peer-to-Peer, P2P) communication. The embodiments of this application are not limited thereto.

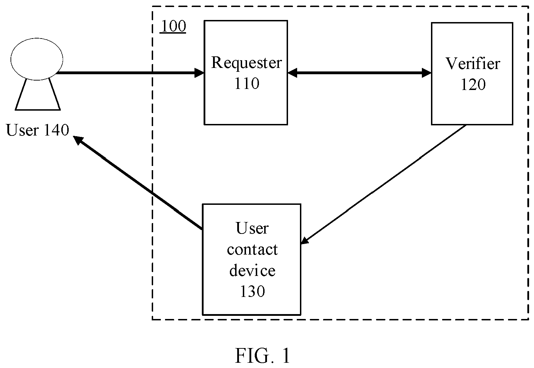

FIG. 1 is a schematic diagram of a system architecture to which an embodiment of this application is applicable.

A system 100 shown in FIG. 1 includes a requester 110 and a verifier 120. Optionally, the system 100 may further include a user contact device 130. A user 140 shown in FIG. 1 is responsible for triggering a password reset request, entering an account, identifying confirmation information, entering double verification information, obtaining verification information from the user contact device, and the like in a requester interface.

It should be understood that the requester 110 may be an application client installed on a device or an apparatus, or may be a hardware device, and the verifier 120 may be a server, or may be a device specially used by a third party for verification. Specific forms for implementing functions of the requester and the verifier are not limited in this embodiment of this application.

In this embodiment of this application, a function of each component in the system 100 is described as follows:

The requester is responsible for providing an operation interface for the user, transmitting a user input to the verifier, and displaying related response message returned by the verifier.

The verifier is responsible for processing a password reset request of the user, verifying validity of an account, obtaining confirmation information for a valid account, generating fake confirmation information for an invalid account, anonymizing confirmation information related to personal data, returning corresponding response message to a client, and sending verification code information to the user contact device.

The user contact device is responsible for receiving verification information sent by the verifier, and providing the verification information for the user.

It should be understood that, in this embodiment of this application, the user contact device and the requester may be a same device, or the user contact device may be another device, for example, another client device. This embodiment of this application is not limited thereto.

Specifically, the user may request, at the requester by using an account and a password through a communication channel, the verifier to perform verification. After the verification succeeds, the requester can log in to a server, and then access a service provided on the server. When the user forgets the password, the verifier may provide a password reset function for the user, so that the user can resume accessing the server.

If a password reset mechanism has a defect, it may be utilized by an attacker as a vulnerability of an entire application program. Even if a hacker fails in brute-force cracking on the original password of the user, the hacker may successfully reset the password for the account by utilizing the vulnerability of the password reset mechanism.

In view of this, the embodiments of this application provide a password reset mechanism, to reduce a password reset vulnerability quantity or avoid a password reset vulnerability while ensuring user experience, and prevent a hacker from cracking a login password for an account by utilizing a vulnerability of the password reset mechanism.

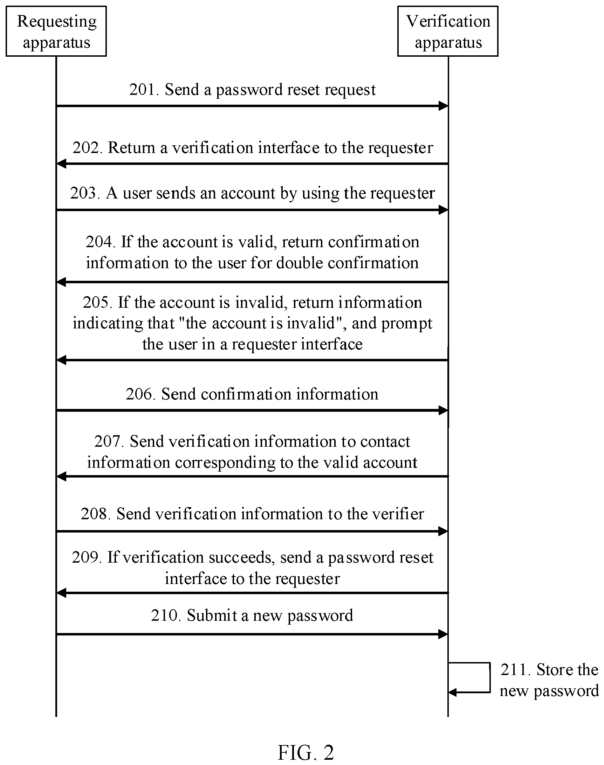

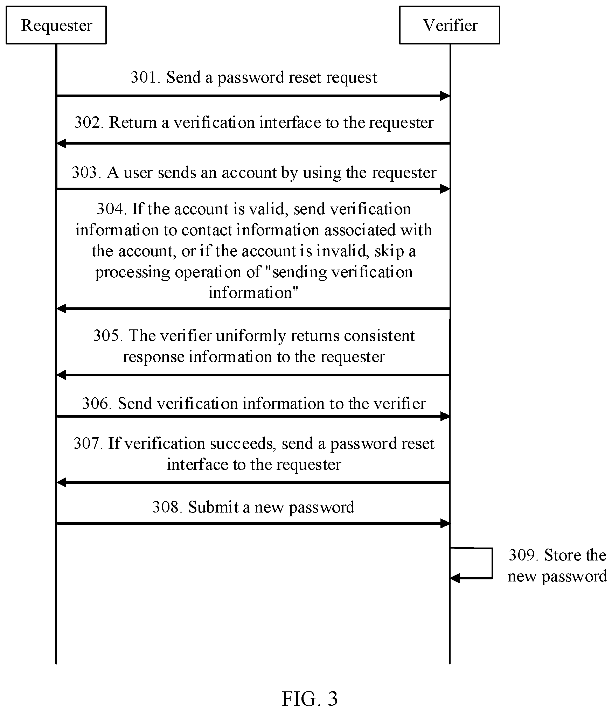

To make the solutions in the embodiments of this application more understandable, before the embodiments of this application are described, two password reset methods are first described below with reference to FIG. 2 and FIG. 3.

FIG. 2 shows a password reset method according to an embodiment of this application. Specifically, the method shown in FIG. 2 includes the following steps.

201. A user sends a password reset request to a verifier by using a requester.

202. The verifier processes the password reset request, and returns a verification interface to the requester.

203. The user enters an account in the requester verification interface and sends the account to the verifier for verification.

204. The verifier verifies the account, and if the account is valid, returns, to the requester for double confirmation by the user, information (or preset information) that corresponds to the account and that is known by the user. Then, step 206 is performed.

205. If the account is invalid, the verifier returns information "invalid account", and prompts the user in a requester interface.

206. The user performs double confirmation by using the information returned to the requester. If the user confirms that the foregoing information known by the user belongs to the user or is accurate, the user sends confirmation information to the verifier by using the requester. If the user confirms that the foregoing information known by the user does not belong to the user or is inaccurate, the user returns to 201 to re-initiate a password reset request.

207. After receiving the confirmation information, the verifier sends verification information (for example, a verification code or a link containing a verification token) to contact information (for example, an email address or a mobile phone number) associated with the account.

208. The user obtains verification information from a device (namely, a user contact device such as a mailbox client or a mobile phone terminal) corresponding to the contact information, and sends the verification information to the verifier by using the requester for double verification.

209. The verifier verifies the verification information sent by the requester, and if the verification succeeds, sends a password reset interface to the requester, or if the verification fails, ends a password reset process.

210. The user sets a new password in the requester password reset interface and submits the new password to the verifier.

211. The verifier stores the account and the corresponding new password, to perform authentication on permission of the user to access the verifier.

In the password reset process in the method shown in FIG. 2, if the account (or the contact information corresponding to the account) entered by the user on the requester interface is invalid, the verifier returns information about "invalidity", and prompts the user on the requester interface. To avoid interference to another user that is caused when the verifier sends verification information to the another user because the user mistakenly enters an account (or a contact method corresponding to the account) of the another user, after validity verification performed by the verifier on the account succeeds, the verifier returns, to the user for double confirmation by the user, the information (or the preset information) that corresponds to the account and that is known by the user. Only after double confirming the known information (or the preset information), the user sends the verification information to the contact information corresponding to the account.

In the password reset method shown in FIG. 2, when the user enters an invalid account, the user can obtain a prompt on the requester interface in a timely manner. When the user enters a valid account that does not belong to the user, the user can perform determining and confirmation in a timely manner by using the returned information known by the user or the preset information. This avoids a case in which the user needs to log in to the contact information device to confirm whether the account is correctly entered, and avoids causing interference to another user. Therefore, user experience and perception are relatively good. However, in the method shown in FIG. 2, an "account enumeration" vulnerability exists. To be specific, a hacker enumerates valid accounts by using prompt information "invalid account" returned by the verifier. Consequently, the hacker may use a large quantity of enumerated accounts to perform brute-force cracking. Therefore, a relatively severe security risk exists in the method shown in FIG. 2.

FIG. 3 shows a password reset method according to an embodiment of this application. Specifically, the method shown in FIG. 3 includes the following steps.

301. A user sends a password reset request to a verifier by using a requester.

302. The verifier processes the password reset request, and returns a requester verification interface to the user.

303. The user enters an account in the requester verification interface and sends the account to the verifier for verification.

304. The verifier verifies the account, and if the account is valid, sends verification information (for example, a verification code or a link containing a verification token) to contact information (for example, an email address or a mobile phone number) associated with the account, or if the account is invalid, skips a processing operation of "sending verification information".

305. The verifier uniformly returns consistent response message to the requester, for example, "a password reset link including the verification information has been sent to an email address of a contact device associated with the account".

In other words, regardless of whether the account is valid, the verifier returns response message with consistent content and a consistent form to the requester.

306. The user obtains verification information from a device (a mailbox verifier or a mobile phone terminal) corresponding to the contact information, and sends the verification information to the verifier by using the requester for double verification.

307. The verifier verifies the verification information sent by the user, and if the verification succeeds, returns a password reset interface to the requester of the user, or if the verification fails, ends a password reset process.

308. The user sets a new password in the requester password reset interface and submits the new password to the verifier.

309. The verifier stores the account and the corresponding new password, to perform authentication on permission of the user to access the verifier.

In the password reset method shown in FIG. 3, because the verifier returns consistent response message for a "valid account" and an "invalid account", a hacker cannot determine, by using the response message, whether the entered account is valid. However, the common user also cannot determine whether the account entered by the common user belongs to the common user, resulting in poor user experience and perception. For example, when the user enters an incorrect account, the user cannot perceive this mistake in the interface in a timely manner, and needs to wait for arrival of the verification information on the device (namely, a user contact device, for example, logging in to a mailbox or checking a mobile phone) corresponding to the contact information. The user may need to wait for a period of time to confirm whether there is an information delay or an incorrect account is entered.

In addition, when the user mistakenly enters another account, because the user cannot perceive and prevent this mistake in a timely manner, a background server sends verification information to contact information corresponding to the another account, resulting in interference to another user. For example, the another user may mistakenly consider that account information of the user is maliciously leaked or account information of the user is attacked by a hacker, and become panicky.

Therefore, in the password reset method shown in FIG. 2, if response message that can be used by the user to determine "account validity" is returned, an "account enumeration" vulnerability exists. In the password reset method shown in FIG. 3, security is achieved at the cost of user experience of the user in a password reset process. Consequently, in the password reset method shown in FIG. 3, a main reason why the user cannot perceive, in a timely manner, whether "an invalid account is entered" or "an account of another user is mistakenly entered" is that the server does not return any response message that can be used for determining by the user.

In view of the foregoing problems, an embodiment of this application skillfully provides a password reset method, to resolve a problem that "a user cannot determine whether an account belongs to the user" in the method in FIG. 3. In addition, in this embodiment of this application, in a process in which the user determines "whether an account belongs to the user", a problem that "a hacker can easily determine, by using a form of response message returned by a server, whether an entered account is valid" in the method in FIG. 2 can be resolved.

In other words, according to the password reset method in this embodiment of this application, a contradiction between security and friendliness (user experience) in a password reset process can be resolved. In the password reset process, an attacker cannot determine validity of an account by using response message returned by a server, but a common user can determine whether an entered account belongs to the common user.

Specifically, in this embodiment of this application, after the server determines the validity of the account, if the account is valid, the server returns confirmation information associated with the account to a client for confirmation by the user, or if the account is invalid, the server also returns fake confirmation information to the client for confirmation by the user.

When a hacker does not know whether the account is valid, the hacker does not know confirmation information corresponding to the valid account or the invalid account either. Therefore, for the confirmation information returned by the server, the hacker cannot determine whether the confirmation information is real confirmation information from the valid account or fake confirmation information from the invalid account. Therefore, an "account enumeration" problem in FIG. 2 is resolved in this embodiment of this application. In addition, because the confirmation information is information known by the user or information preset by the user, the common user can identify, by using the returned confirmation information, whether the confirmation information is related to the common user. If the user determines that the confirmation information is not related to the user, it indicates that the entered account is incorrect or an account of another user is mistakenly entered. Therefore, a problem that "a user cannot determine whether confirmation information is related to the user" in FIG. 3 is also resolved in this embodiment of this application.

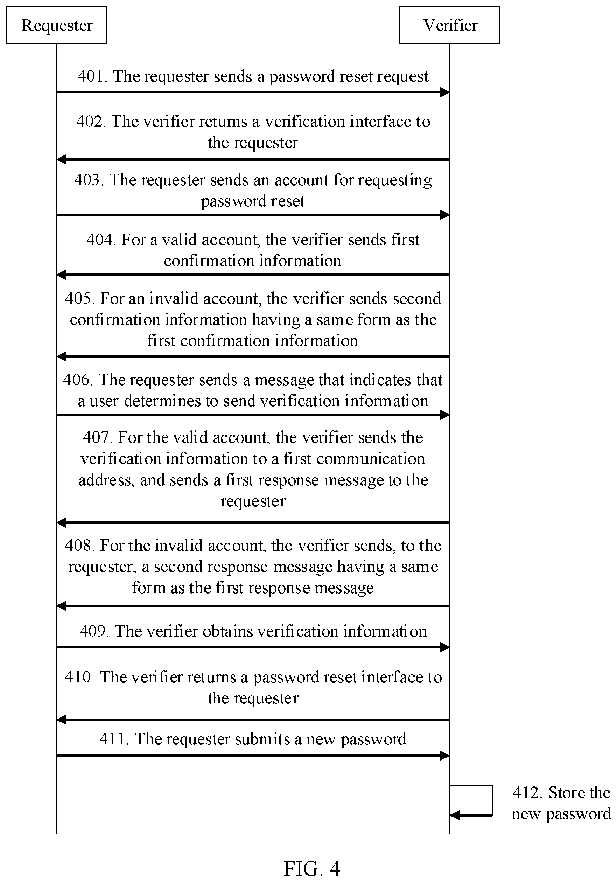

The following describes a password reset method in an embodiment of this application in detail with reference to FIG. 4.

It should be understood that the method shown in FIG. 4 may be applied to the system architecture shown in FIG. 1. Specifically, the method 400 shown in FIG. 4 includes the following steps.

401. A requester sends a password reset request.

Specifically, a user sends the password reset request to a verifier by using a "forgot password" link in a requester interface.

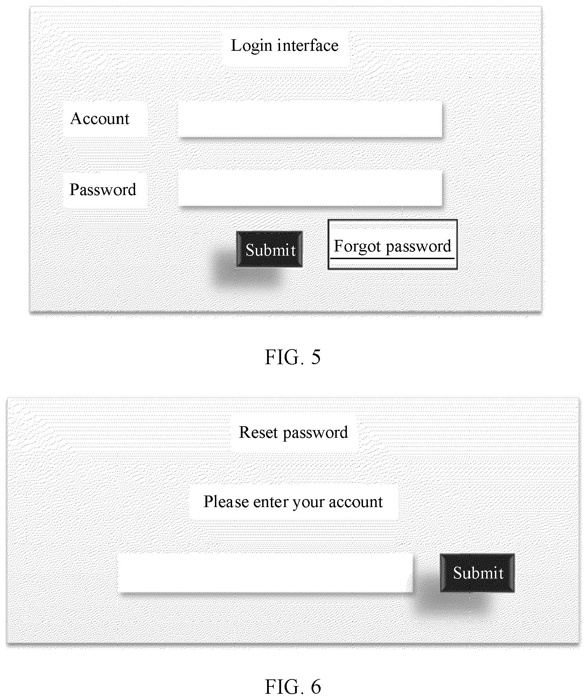

For example, as shown in FIG. 5, when the user logs in to an account in a login interface displayed by the requester, if the user forgets a password, the user may send the password reset request to the verifier by using the "forgot password" link.

It should be understood that FIG. 5 is merely an example. "Forgot password" in FIG. 5 may trigger a password reset function. After the user clicks/taps "forgot password", the requester may send the password reset request to the verifier. The "forgot password" herein may also be replaced by "retrieve password", "reset password", or the like. This embodiment of this application is not limited thereto.

It should be understood that the account in this embodiment of this application may include an email address, a mobile phone number, an account of a third-party application, a character string registered by the user with the verifier, or a biometric feature such as a facial feature or a fingerprint of the user. This embodiment of this application is not limited thereto.

It should be understood that, in this embodiment of this application, the password of the account may include a personal identification number (personal identification number, PIN), a key, a private key, a character string specified by the user, or a biometric feature such as a facial feature or a fingerprint of the user. This embodiment of this application is not limited thereto.

It should be understood that, in this embodiment of this application, a communications protocol between the requester and the verifier may be a communications protocol such as the hypertext transfer protocol over secure sockets layer (Hyper Text Transfer Protocol over Secure Socket Layer, HTTPS), the secure file transfer protocol (Secure File Transfer Protocol, SFTP), the transmission control protocol (Transmission Control Protocol, TCP), or the user datagram protocol (User Datagram Protocol, UDP). This embodiment of this application is not limited thereto.

402. The verifier returns a verification interface to the requester.

Specifically, the verifier processes the password reset request, and returns, to the requester, the verification interface for entering the account.

For example, as shown in FIG. 6, after obtaining the password reset request sent by the requester, the verifier returns a "please enter an account" interface to a client.

For example, the verifier may add, to a returned message, a parameter used to carry an entered account. After the user enters the account, the verifier may obtain the entered account from the parameter.

403. The requester sends the account for requesting password reset.

For example, the requester sends, to the verifier, the account entered by the user for requesting password reset.

Correspondingly, the verifier receives the account that is sent by the requester and that is entered by the user for requesting password reset.

In other words, the user enters the account in the requester verification interface and sends the account to the verifier for verification.

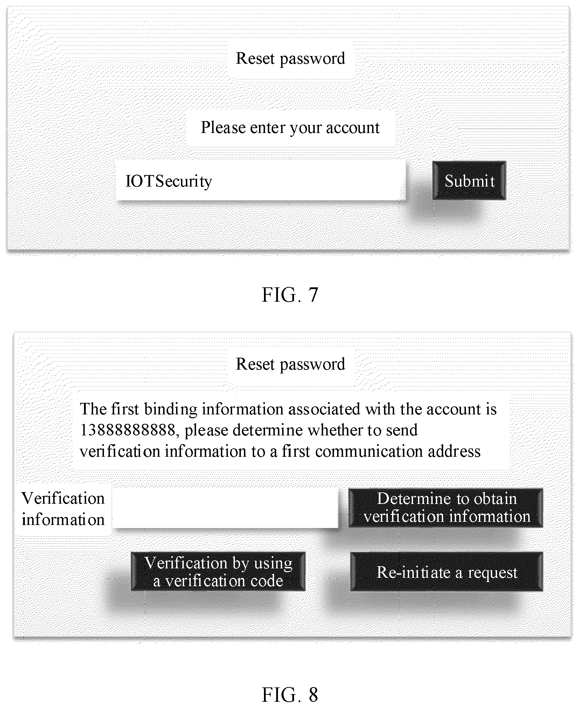

For example, as shown in FIG. 7, the account entered by the user is "IOTSecurity". When entering the account, the user may send the account to the verifier by clicking/tapping a "submit" button.

Step 402 and step 403 show a case in which the user directly enters and submits the account.

Alternatively, in another embodiment, in FIG. 6 in step 402, when returning the "please enter an account" interface to the client after obtaining the password reset request sent by the requester, the verifier may further display "enter a verification code" by using the client. The verification code may be randomly generated by the verifier. This embodiment of this application is not limited thereto.

Correspondingly, in FIG. 7 in step 403, after entering the account and a verification code, the user sends the account and the verification code to the verifier by using the "submit" button.

In this embodiment of this application, an option of entering the verification code by the user is added, so that a machine can be prevented from ceaselessly and maliciously sending an account that requires password reset, and system security can be improved.

404. For a valid account, the verifier sends first confirmation information.

Specifically, when determining that the account is the valid account, the verifier sends the first confirmation information to the requester, the first confirmation information is used to enable the requester to display, to the user, first binding information associated with the account, and request the user to determine whether to send verification information to a first communication address associated with the account, and the first binding information is information that corresponds to the account and that is known by the user.

In other words, the verifier verifies the account, and if the account is valid, returns the first binding information (or preset information) of the account for double confirmation by the user.

It should be understood that, in this embodiment of this application, the first binding information associated with the account may be any information known by the user.

The user may pre-associate the first binding information with the account. For example, the user may associate the first binding information with the account when registering the account, or the user associates the first binding information with the account in a process of using the account. This embodiment of this application is not limited thereto.

For example, the first binding information may be any information known by the user, for example, a mobile phone number of the user, an email address of the user, a contact address of the user, a name of the user, an employee ID of the user, a geographical name, a hometown of the user, a name of a relative of the user, a hobby of the user, or a name of a school of the user. This embodiment of this application is not limited thereto.

For example, the first binding information may be an email address "corenet@huawei.com" or a mobile phone number "13888888888" that is associated with the account and that is known by the user.

After obtaining the first confirmation information, the requester may display the first binding information to the user, and request the user to determine whether to send the verification information to the first communication address. For example, content displayed by the requester is "the first binding information is xx, please determine whether to send verification information to a first communication address associated with the account". It should be understood that, in this case, the first binding information may be directly displayed information (in other words, a specific address is displayed), but specific address information of the first communication address may not be displayed.

For example, as shown in FIG. 8, the first binding information is the mobile phone number 13888888888. After obtaining the first confirmation information sent by the verifier, the requester may display "the first binding information associated with the account is 13888888888, please determine whether to send verification information to a first communication address" to the user.

Optionally, the first binding information may be the first communication address. In this case, the first binding information and the first communication address are same information.

In other words, after obtaining the first confirmation information, the requester may request the user to "determine whether to send verification information to a first communication address". The first communication address herein is the foregoing first binding information, and the first communication address is directly displayed information (in other words, a specific address is displayed).

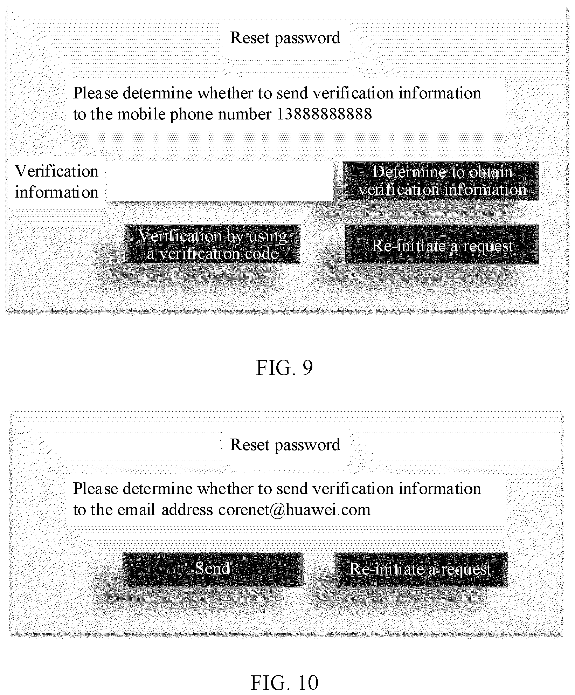

For example, when the first binding information is the mobile phone number 13888888888, FIG. 8 may be replaced by FIG. 9. As shown in FIG. 9, the requester displays "please determine whether to send verification information to a mobile phone number 13888888888" to the user. In this case, the mobile phone number is the first binding information, and is also the first communication address.

For another example, when the first binding information is the email address corenet@huawei.com, as shown in FIG. 10, the requester displays "please determine whether to send verification information to an email address corenet@huawei.com" to the user. In this case, the email address is the first binding information, and is also the first communication address.

It should be understood that, the first confirmation information may include the content displayed by the requester to the user. For example, the first confirmation information is "the first binding information associated with the account is 13888888888, please determine whether to send verification information to a first communication address", or the first confirmation information is "please determine whether to send verification information to an email address corenet@huawei.com". Optionally, the first confirmation information may include only the first binding information. In this case, the requester may display the foregoing content to the user according to a default setting. In other words, in this case, after obtaining the first binding information, the requester may display, to the user according to the default setting, the content shown in FIG. 8 to FIG. 10.

It should be understood that, the foregoing describes a case in which the requester displays the first binding information in a plaintext manner in FIG. 8 to FIG. 10. Optionally, in another embodiment, to avoid leakage of personal privacy of the user, the first binding information may be anonymously displayed. In other words, the first binding information is anonymous information.

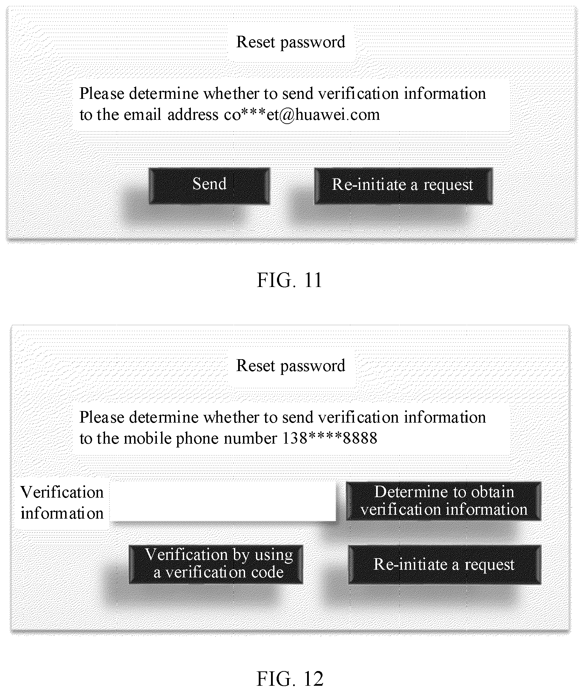

For example, as shown in FIG. 11, if the first binding information is an email address, the requester may display the first binding information according to the following anonymization rule: a mailbox verifier, the first two characters of a mailbox name, and the last two characters of the mailbox name are retained, and the rest are replaced by asterisks. Alternatively, as shown in FIG. 12, if the first binding information is a mobile phone number, the requester may display the first binding information according to the following anonymization rule: the first three characters and the last four characters are retained, and the rest are replaced by asterisks.

It should be understood that, in this embodiment of this application, the first binding information may be alternatively displayed anonymously. This embodiment of this application is not limited thereto. For example, when the first binding information is a name of the user, only the user's last name may be displayed, and the user's first name is replaced by an asterisk. For example, if the first binding information is "Zhangsan", the requester may display "the first binding information associated with the account is Zhang ^{∗}, please determine whether to send verification information to a first communication address" or the like to the user. This embodiment of this application is not limited thereto.

In this embodiment of this application, the anonymous information is displayed, so that an attacker can be prevented from leaking, by entering a valid account, personal data corresponding to the account, and user privacy security can be protected.

405. For an invalid account, the verifier sends second confirmation information having a same form as the first confirmation information. It should be noted that, that forms are the same in this application means that composition structures and presentation manners are the same. In other words, a composition structure and a presentation manner of the first confirmation information are the same as those of the second confirmation information.

Specifically, when determining that the account is the invalid account, the verifier generates, based on the account, second binding information corresponding to the account, and sends, to the requester, the second confirmation information having the same form as the first confirmation information, the second confirmation information is used to enable the requester to display the second binding information to the user, and request the user to determine whether to send verification information to a second communication address corresponding to the account, and the second binding information and the first binding information have a same form.

It should be understood that the second communication address may be generated by the verifier based on the invalid account, and the second communication address may be a fake communication address or a meaningless communication address. In actual application, the verifier sends no verification information to the second communication address. The second communication address is in a one-to-one correspondence with the invalid account entered by the user. In other words, different invalid accounts correspond to different second communication addresses.

In other words, the verifier verifies the account. If the account is invalid, the verifier generates fake confirmation information that corresponds to the invalid account and whose form is consistent with the form of the first confirmation information, and returns the fake confirmation information to a requester interface.

It should be understood that, in this embodiment of this application, when the verifier verifies that the account is valid, the requester displays the first binding information that is associated with the account and that is known by the user. The first binding information is information prestored by the verifier, and does not need to be generated by the verifier. When the verifier verifies that the account is invalid, the verifier generates the second confirmation information that corresponds to the invalid account and whose form is consistent with that of the first confirmation information, and returns the second confirmation information to the requester interface. In other words, the verifier generates binding information (the second binding information) only when the account is invalid. If the account is valid, the verifier does not need to generate binding information.

In this application, the corresponding fake confirmation information (namely, the second confirmation information) whose form is consistent with that of the first confirmation information is generated for the invalid account. Because the form of the fake confirmation information needs to be consistent with a form of confirmation information corresponding to a real account, a hacker cannot determine validity of the entered account by using the confirmation information. Therefore, in this embodiment of this application, a problem that the hacker enumerates valid accounts by using prompt information "invalid account" returned by a server can be resolved, and system security performance can be improved.

In addition, in this application, information known by the user or preset information is used as confirmation information. For the hacker, when the hacker does not know whether the account is valid, the hacker cannot know confirmation information corresponding to the account either. Therefore, when the server returns confirmation information, the hacker cannot identify whether the confirmation information is authentic. However, for a common user, if an incorrect account is entered, the common user may identify, by using known information or preset information (namely, the foregoing first binding information), that returned information does not belong to the common user (the information is confirmation information for another user, or is fake confirmation information). Therefore, in this embodiment of this application, a problem that the user cannot perceive, in a timely manner, whether "an invalid account is entered" or "an account of another user is mistakenly entered" can also be resolved, and user experience can be improved.

Optionally, in another embodiment, the verifier may generate, based on the account, the second binding information uniquely corresponding to the account.

For example, the verifier may generate, based on the invalid account by using a first function algorithm (for example, a random seed-based generation algorithm, a hash-based generation algorithm, or an iteration-based generation algorithm), the second binding information uniquely corresponding to the invalid account. This embodiment of this application is not limited thereto.

It should be understood that, in this embodiment of this application, the second binding information corresponding to the invalid account may be generated by using a plurality of algorithms, provided that only same binding information is generated for a same invalid account entered for a plurality of times. This embodiment of this application is not limited thereto.

Optionally, in another embodiment, similar to the first binding information, the second binding information and the second communication address may also be same information. This embodiment of this application is not limited thereto.

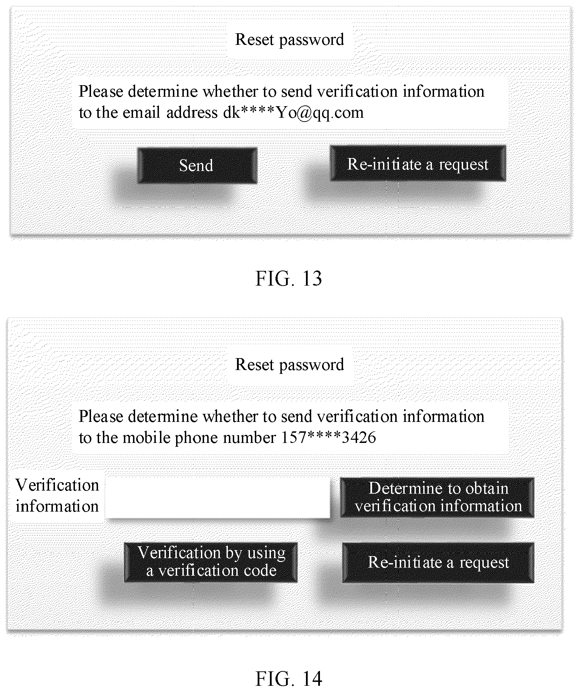

For example, the first binding information is the first communication address, and the second binding information is the second communication address. As shown in FIG. 13, if the user enters an invalid account "invalidAccount" in step 403, the verifier generates fake binding information (namely, the second binding information) dk^{∗∗∗∗}Yo@qq.com corresponding to the account, and sends the fake binding information to the user for confirmation.

For another example, as shown in FIG. 14, if the user enters an invalid account "invalidAccount" in step 403, the verifier generates fake binding information (namely, the second binding information) 157^{∗∗∗∗}3426 corresponding to the account, and sends the fake binding information to the user for confirmation.

It should be understood that a form of the second binding information is the same as a form of the first binding information, and a manner of displaying the second binding information by the requester is the same as a manner of displaying the first binding information. For example, corresponding to the manner of displaying the first binding information, the requester may display the second binding information in an anonymous manner or a plaintext manner.

Optionally, in another embodiment, that the verifier generates, based on the account, second binding information corresponding to the account when determining that the account is the invalid account includes:
generating, by the verifier based on the account and a first key, the second binding information corresponding to the account.

Specifically, to guard against a malicious internal person (for example, a programmer or an insider) who knows a process of generating fake confirmation information, when the fake confirmation information is generated, a secret (which may also be referred to as a key) such as a key string may be introduced when the second binding information is generated in this embodiment of this application. The verifier stores the secret, and generates the fake confirmation information with participation of the secret. Therefore, the malicious internal person cannot determine a relationship between the fake confirmation information and the invalid account without knowing the secret.

Therefore, in this embodiment of this application, the key is introduced before the fake confirmation information for the invalid account is generated, and the key and the invalid account are used together to generate the fake confirmation information (the second binding information). Therefore, the malicious internal person knowing the process of generating the fake confirmation information cannot determine the relationship between the fake confirmation information and the invalid account without knowing the secret. System security performance can be improved in this embodiment of this application.

Specifically, in another embodiment, the generating, by the verifier based on the account and a first preset key, the second binding information corresponding to the account includes:
obtaining, by the verifier, the first key;
combining, by the verifier, the first key and the account, to generate combined data; and
generating, by the verifier, the second binding information based on the combined data by using a first function algorithm, where the first function algorithm is used to generate output information uniquely corresponding to one piece of input information.

It should be understood that, in this embodiment of this application, the first function algorithm may be a plurality of types of algorithms such as a random seed-based generation algorithm, a hash-based generation algorithm, or an iteration-based generation algorithm, provided that the first function algorithm can be used to generate uniquely corresponding output information (the second binding information) for a same piece of input information (the combined data). This embodiment of this application is not limited thereto.

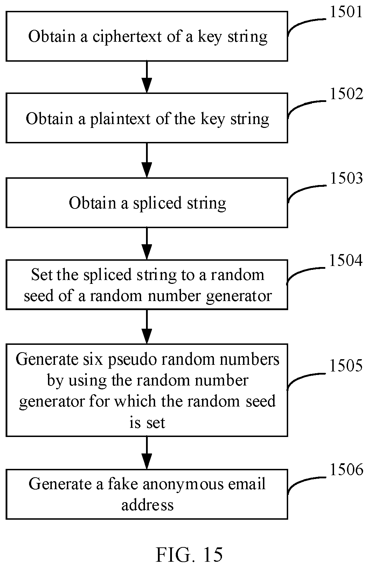

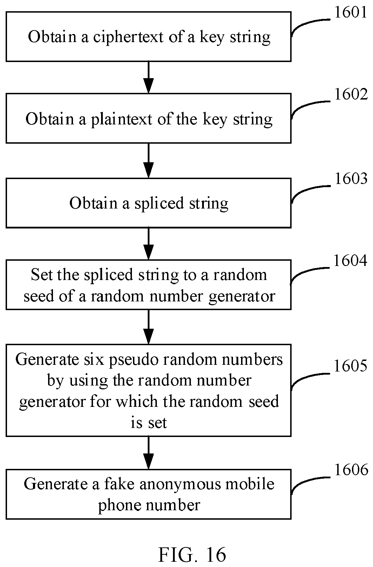

For example, if the second binding information is generated by using the random seed-based generation algorithm, the verifier may use a spliced string of the invalid account and a key string as a random seed, and then generate the fake confirmation information (the second confirmation information) based on the random seed. The following describes a specific process in which the verifier generates, for the invalid account by using the random seed-based generation algorithm, a unique fake anonymous email address shown in FIG. 15 or a unique fake anonymous mobile phone number shown in FIG. 16.

The following describes a method for generating a fake anonymous email address.

For example, it is assumed that a form of a real anonymous email address is that a mailbox verifier, the first two characters of a mailbox name, and the last two characters of the mailbox name are retained, and the rest are represented by asterisks. To keep consistent with an anonymous email address of a valid account in terms of a form, the fake anonymous email address needs to display a mailbox verifier, the first two characters of a mailbox name, and the last two characters of the mailbox name, and the rest are represented by asterisks.

It is assumed that a key string used to generate the fake anonymous email address is "secretString", and is stored in a storage system (a database or a file system) after being encrypted by using a verifier key. It is assumed that the invalid account is "invalidAccount". A process of generating the fake anonymous email address is shown in FIG. 15, and may include the following steps.

1501. The verifier obtains a ciphertext of the key string from the storage system (the database or the file system).

1502. The verifier decrypts the key string by using the key key, to obtain a plaintext "secretString" of the key string.

1503. The verifier splices the key string "secretString" and the invalid account "invalidAccount" to obtain a spliced string seed = secretString∥invalidAccount (namely, the foregoing combined data).

1504. The verifier sets the spliced string to a random seed of a random number generator.

1505. The verifier generates six pseudo random numbers: an index 1, an index 2, an index 3, an index 4, an index 5, and an index 6 by using the random number generator for which the random seed is set.

The index 1 is used to randomly select a mailbox verifier from a mailbox verifier list as a mailbox verifier of a fake mailbox. For example, the mailbox verifier list is {"@qq.com", "@163.com", "@hotmail.com", "@gmail.com", "@sina.com"}.

The index 2, the index 3, the index 4, and the index 5 are used to select random characters from a character list as a first character, a second character, a last character, and a penultimate character of a fake mailbox name respectively. For example, an optional character list is:
{0123456789abcdefghijklmnopqrstuvwxyzABCDEFGHIJKLMNOPQRS TUVWXYZ} .

The index 6 is used to randomly select a quantity of displayed asterisks "^{∗}". It is assumed that the quantity of asterisks can be randomly selected from an integer list {3, 4, 5, 6, 7}.

It should be understood that, in this embodiment of this application, if spliced string seeds used as random seeds are the same, a same group of random numbers: an index 1, an index 2, an index 3, an index 4, an index 5, and an index 6 are generated each time, to ensure a correspondence between the invalid account and the fake anonymous email address.

1506. The verifier obtains characters at corresponding locations based on the random numbers: the index 1, the index 2, the index 3, the index 4, the index 5, and the index 6, splices the characters into a character string according to an anonymous email address display rule, and uses the character string as the fake anonymous email address for the invalid account.

If the user enters the invalid account "invalidAccount" in step 403, the verifier generates one-to-one corresponding fake confirmation information "dk^{∗∗∗∗}Yo@qq.com", and sends the fake confirmation information to the user for confirmation.

The following describes a method for generating a fake anonymous mobile phone number.

For example, it is assumed that a form of a real anonymous mobile phone number is that the first three characters and the last four characters are retained, and the rest are replaced by asterisks. To keep consistent with an anonymous mobile phone number of a valid account in terms of a form, the fake anonymous mobile phone number needs to display the first three characters and the last four characters of the mobile phone number, and the rest are represented by asterisks.

It is assumed that a key string used to generate the fake anonymous mobile phone number is "secretString", and is stored in a storage system (a database or a file system) after being encrypted by using a verifier key key. It is assumed that the invalid account is "invalidAccount". A process of generating the fake anonymous mobile phone number is shown in FIG. 16, and may include the following steps.

1601. The verifier obtains a ciphertext of the key string from the storage system (the database or the file system).

1602. The verifier decrypts the key string by using the key key, to obtain a plaintext "secretString" of the key string.

1603. The verifier splices the key string "secretString" and the invalid account "invalidAccount" to obtain a spliced string seed = secretString∥invalidAccount (namely, the foregoing combined data).

1604. The verifier sets the spliced string seed to a random seed of a random number generator.

1605. The verifier generates six pseudo random numbers: an index 1, an index 2, an index 3, an index 4, an index 5, and an index 6 by using the random number generator for which the random seed is set.

The index 1, the index 2, the index 3, the index 4, the index 5, and the index 6 are used to select random characters from a character list {0123456789} as the second character, the third character, the last character, the penultimate character, the antepenultimate character, and the last but three character of the fake anonymous mobile phone number respectively.

It should be understood that, in this embodiment of this application, if spliced string seeds used as random seeds are the same, a same group of random numbers: an index 1, an index 2, an index 3, an index 4, an index 5, and an index 6 are generated each time, to ensure a correspondence between the invalid account and the fake anonymous mobile phone number.

1606. The verifier obtains characters at corresponding locations based on the random numbers: the index 1, the index 2, the index 3, the index 4, the index 5, and the index 6. The first character of the mobile phone number is 1 by default, and a character at another location is replaced by an asterisk "^{∗}". Finally, characters at all locations are spliced into a character string, and the character string is used as the fake anonymous mobile phone number for the invalid account.

If the user enters the invalid account "invalidAccount" in step 403, the verifier generates one-to-one corresponding fake confirmation information "157^{∗∗∗∗}3426", and sends the fake confirmation information to the user for confirmation.

It should be understood that the foregoing describes that the combined data is in a form of the string obtained by splicing the invalid account and the key. Optionally, the combined data may be in a form of any combination of the invalid account and the key. This embodiment of this application is not limited thereto.

The foregoing describes a process of generating the second binding information by using the random seed-based generation algorithm. Optionally, in this embodiment of this application, the second binding information may be alternatively generated by using another algorithm such as the hash-based generation algorithm or the iteration algorithm, provided that these algorithms can be used to generate uniquely corresponding output information (namely, the second binding information whose form is consistent with that of the first binding information) for a same piece of input information (the combined data). This embodiment of this application is not limited thereto.

It should be noted that, in this embodiment of this application, the first binding information and the second binding information may be anonymously displayed in step 404 and step 405. However, in this case, a collision of information known by the user is caused.

For example, when a mobile phone number bound to a first account is 13888888888, and a mobile phone number bound to a second account is 13889998888, the two mobile phone numbers are both anonymously displayed as 138^{∗∗∗∗}8888. In this case, when the user mistakenly enters the second account as the first account, if the user sees a displayed mobile phone number "138^{∗∗∗∗}8888", the user considers that the user enters the first account. Therefore, the user may determine to send verification information by using the verifier. In this case, a mobile phone, namely, 13889998888, of another user receives the verification information, but a mobile phone, namely, 13888888888, of the user of the first account receives no verification information. This affects user experience.

Therefore, to avoid the information collision, alternatively, in another embodiment, step 404 may be replaced by the following content:

In addition to being used to enable the requester to display, to the user, the first binding information associated with the account, and request the user to determine whether to send the verification information to the first communication address associated with the account, the first confirmation information is further used to enable the requester to display, to the user, third binding information associated with the account, and the third binding information is information that corresponds to the account and that is known by the user.

It should be understood that the third binding information is also information known by the user, and a definition of the third binding information is similar to that of the first binding information. To avoid repetition, details are not described herein again. It should be noted that, in this embodiment of this application, the first binding information is different from the third binding information.

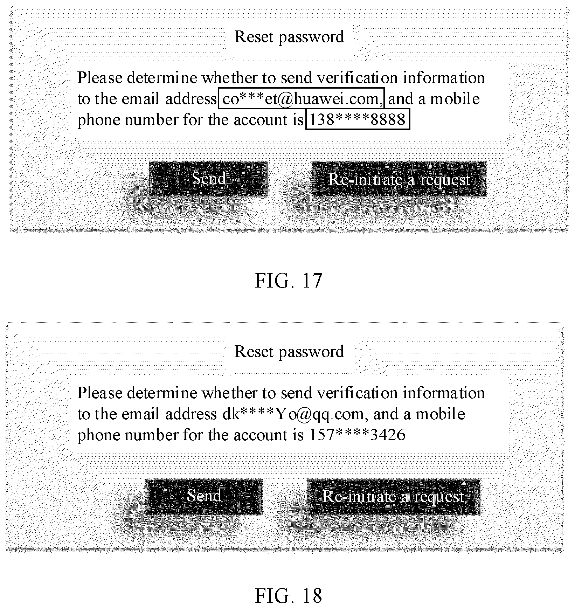

For example, as shown in FIG. 17, when the first binding information is an email address co^{∗∗∗}et@huawei.com, and when the third binding information is a mobile phone number 138^{∗∗∗∗}8888, after the requester obtains the first confirmation information sent by the verifier, the requester may display "please determine whether to send verification information to an email address co^{∗∗∗}et@huawei.com, and a mobile phone number for the account is 138^{∗∗∗∗}8888" to the user.

Similarly, step 405 may be replaced by the following content:

In addition to being used to enable the requester to display, to the user, the second binding information associated with the account, and request the user to determine whether to send the verification information to the second communication address, the second confirmation information is further used to enable the requester to display, to the user, fourth binding information corresponding to the account, and the fourth binding information is information that is generated by the verifier and that has a same form as the third binding information.

It should be understood that the fourth binding information is another piece of information that is generated by the verifier and that corresponds to the account. Specifically, a definition and a generation method of the fourth binding information are similar to those of the second binding information. To avoid repetition, details are not described herein again.

Similarly, when the account is invalid, a plurality of pieces of fake confirmation information need to be generated for the invalid account. It should be noted that, in this embodiment of this application, the second binding information is different from the fourth binding information.

For example, as shown in FIG. 18, when the second binding information is an email address dk^{∗∗∗∗}Yo@qq.com, and the forth binding information is a mobile phone number 157^{∗∗∗∗}3426, after the requester obtains the second confirmation information sent by the verifier, the requester may display "please determine whether to send verification information to an email address dk^{∗∗∗∗}Yo@qq.com, and a mobile phone number for the account is 157^{∗∗∗∗}3426" to the user.

It should be understood that the foregoing describes a case in which the requester anonymously displays two pieces of binding information simultaneously. Optionally, in this embodiment of this application, three or more pieces of binding information may be simultaneously displayed. This embodiment of this application is not limited thereto.

Therefore, in this embodiment of this application, a plurality of pieces of binding information are displayed, so that a quantity of information collisions caused by anonymous display can be reduced, and user experience can be improved.

406. The requester sends a message that indicates that the user determines to send the verification information.

Specifically, the requester sends, to the verifier, the message that indicates that the user determines to send the verification information, and correspondingly, the verifier obtains the message that is sent by the requester and that indicates that the user determines to send the verification information.

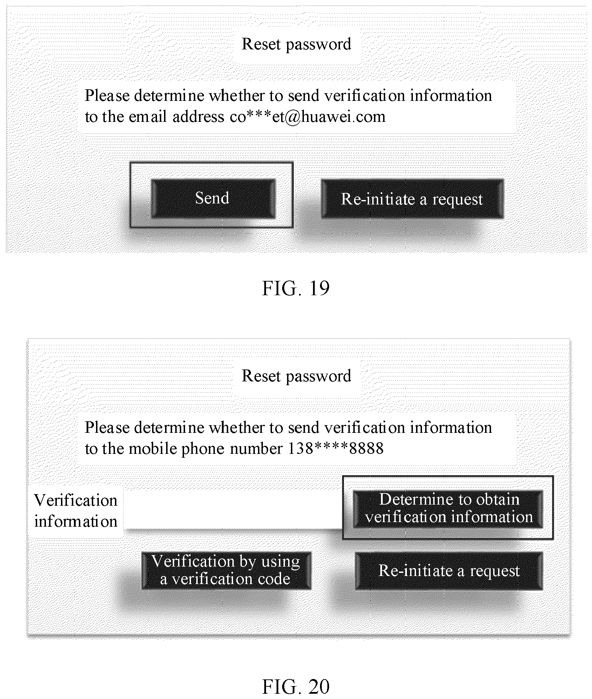

For example, the user performs double confirmation by using returned information. As shown in FIG. 19 or FIG. 20, if the user confirms, based on binding information, that the account is an account belonging to the user, the user sends confirmation information to the verifier. If the user confirms that the account is not an account belonging to the user, the user returns to 401 to re-initiate a password reset request.

It should be understood that, in this embodiment of this application, the user may return to 401 in a plurality of manners, to re-initiate the password reset request. For example, the user may resend the password reset request by re-accessing the "forgot password" link, by using a back button of a browser, or by using a "button" specially used to trigger the password reset request. This embodiment of this application is not limited thereto.

407. For the valid account, the verifier sends the verification information to the first communication address, and sends a first response message to the requester.

Specifically, the verifier obtains the message that is sent by the requester and that indicates that the user determines to send the verification information. When the account is the valid account, the verifier sends the verification information to the first communication address, and sends the first response message to the requester, and the first response message is used to prompt the user that the verifier has sent the verification information to the first communication address.

In other words, after the verifier receives the confirmation information, if the account is valid, the verifier sends verification information (for example, a verification code or a link containing a verification token) to contact information (namely, the first communication address) (for example, an email address or a mobile phone number) associated with the account, and sends, to the requester interface of the user, a message (namely, the first response message) about sending the verification information.

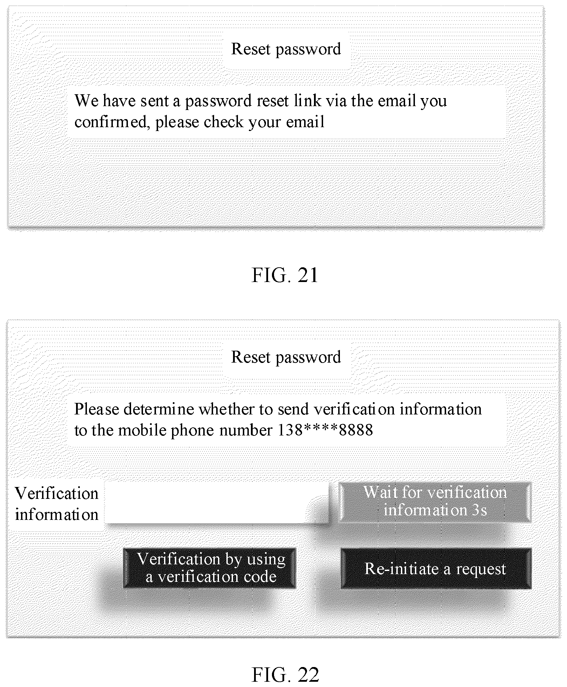

For example, as shown in FIG. 21, for a mailbox device, the verifier may send, by using an SMTP mail transfer protocol to an email address associated with the account, a reset link that contains the verification information, and send the first response message to the requester. The first response message is used to prompt the user that "we have sent a password reset link via the email you confirmed, please check your email".

As shown in FIG. 22, for a mobile phone number, the verifier may send verification code information to the mobile phone number by using an SMS message protocol such as SMPP, CMPP, or SMGP, and send the first response message to the requester. The first response message is used to prompt the user that the verifier has sent the verification information to the first communication address, and display, to the user, an interface of waiting for entering of verification information.

408. For the invalid account, the verifier sends, to the requester, a second response message having a same form as the first response message.

Specifically, when the account is the invalid account, the verifier directly sends, to the requester, the second response message having the same form as the first response message, and the second response message is used to prompt the user that the verifier has sent the verification information to the second communication address.

In other words, if the account is invalid, a response message having a same form as that in step 407 is directly sent to the requester of the user.

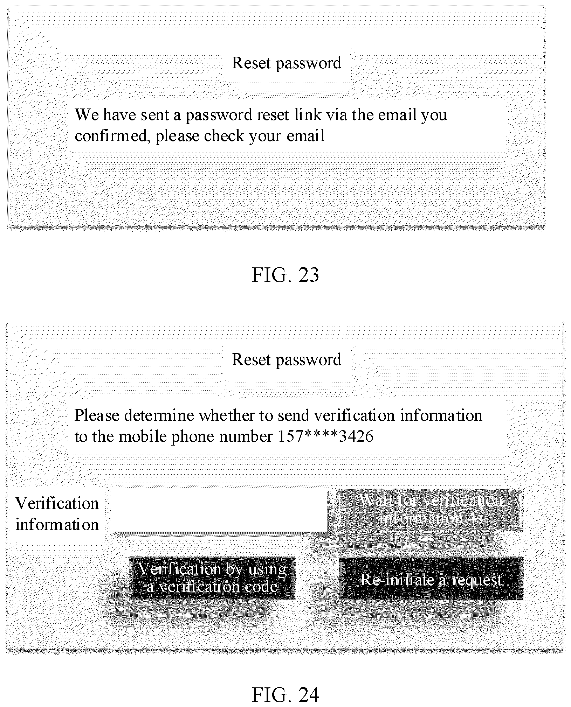

For example, as shown in FIG. 23, the verifier directly displays, for the invalid account, a prompt interface of sending the verification information.

As shown in FIG. 24, in a scenario in which a mobile phone number is used for verification, when the account is invalid, the user also sees an interface waiting for arrival of a verification code. In other words, the verifier directly displays, for the invalid account, a prompt interface of sending verification information to the mobile phone number.

Therefore, in this application, corresponding fake confirmation information in a consistent form is generated for the invalid account, and regardless of any operation performed by the user in a client interface in which the fake confirmation information is returned, the server returns a response message consistent with that for the valid account. First, a form of the fake confirmation information needs to be consistent with that of confirmation information corresponding to a real account. In this way, a hacker cannot determine validity of the entered account by using the confirmation information. In addition, regardless of any operation performed by the user in the client interface in which the fake confirmation information is returned, the server returns the response message consistent with that for the valid account. In this way, the hacker also cannot determine the validity of the entered account by using the response message. In conclusion, a problem that a hacker enumerates valid accounts by using prompt information "invalid account" returned by a server in the method in FIG. 2 is resolved in this application.

Optionally, in another embodiment, when the account is invalid, regardless of any input performed by the user in an "enter a mobile phone verification code" interface, the verifier may directly return "the entered mobile phone verification code is invalid".

Optionally, when the account is valid, if the user enters incorrect verification information in an "enter a mobile phone verification code" interface, the verifier may also directly return "the entered mobile phone verification code is invalid".

Because the hacker cannot receive an SMS verification code, the hacker does not know whether "the entered mobile phone verification code is invalid" displayed by the requester is a feedback corresponding to an invalid account or a feedback corresponding to an incorrectly entered valid account. Therefore, a password reset vulnerability can be avoided.

Because the invalid account cannot be used to obtain verification information, the invalid account cannot be used to perform a subsequent password reset process. In actual application, an attacker may continuously request password reset for a plurality of invalid accounts. This may cause network congestion, and affect system performance. For this problem, in this embodiment of this application, when the server verifier determines that a quantity of consecutive times for which the user requests password reset for the invalid account by using the requester reaches a preset threshold, an access request from the requester to the server verifier is locked. It should be understood that the preset threshold may be a value preset by a system, for example, may be 6, 8, 12, or the like. This embodiment of this application is not limited thereto.

In this embodiment of this application, the requester is locked, so that a malicious attack from an attacker can be prevented, and system performance can be improved.

409. The verifier obtains verification information.

Specifically, the user entering the valid account that belongs to the user may obtain verification information from a device (a mailbox verifier or a mobile phone terminal) corresponding to the contact information, and send the verification information to the verifier for double verification.

For example, for the account IOTSecurity, the user logs in to a mailbox huawei@qq.com, and opens an email. The verification information is sent to the verifier for double verification by clicking/tapping a reset link in the email.

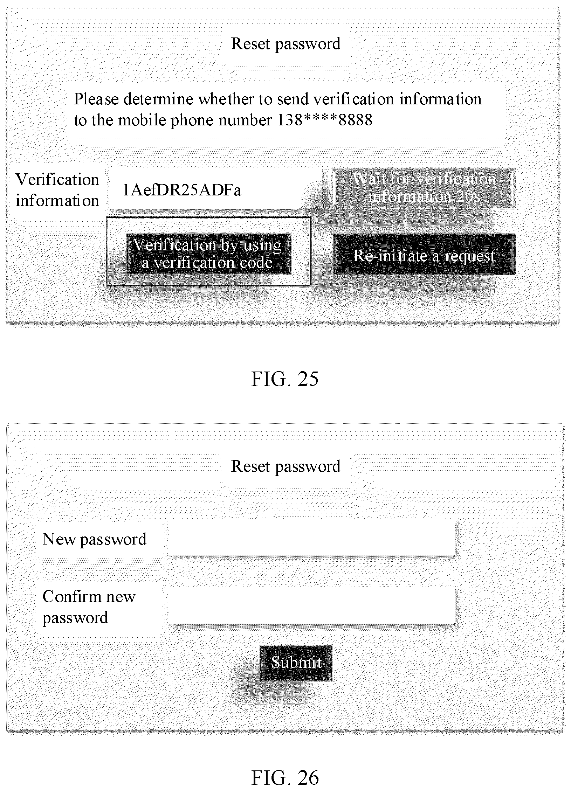

Alternatively, for example, as shown in FIG. 25, in a scenario in which a mobile phone number is used for verification, for the account IOTSecurity, the user checks a mobile phone to read a verification code, enters the verification code in an interface, and clicks/taps "verification by using a verification code" to send the verification code to the verifier for double verification.

It should be understood that the verification information may be sent by the user to the verifier by using the requester. Optionally, the verification information may be alternatively sent by the user to the verifier directly by using a user contact device. This embodiment of this application is not limited thereto.

For the user entering the invalid account, because the verifier sends no verification information to contact information of the invalid account, the user cannot receive a password reset link containing verification information or read verification code information from a mobile phone number for a next operation. Therefore, system security can be improved in this embodiment of this application.

It should be understood that, in this embodiment of this application, the verification information is randomly generated by the verifier, and the verification information has security strength against current brute-force cracking.

410. The verifier returns a password reset interface to the requester.

Specifically, when verifying that the verification information is accurate, the verifier return the password reset interface to the requester.

For example, as shown in FIG. 26, the verifier verifies the verification information sent by the user, and if the verification succeeds, sends the password reset interface, or if the verification fails, ends a password reset process and deletes the previously generated verification information.

411. The requester submits a new password.

Specifically, the verifier obtains the new password that is submitted by the requester and that is entered by the user by using the password reset interface.

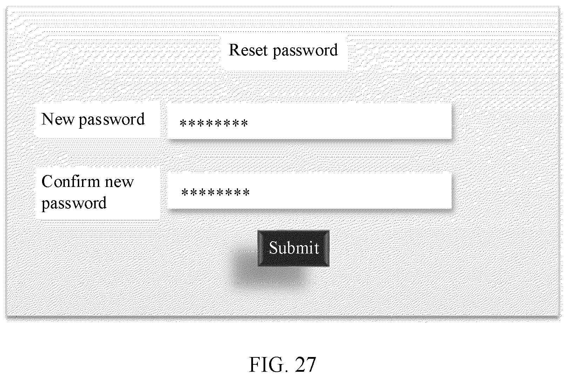

For example, as shown in FIG. 27, the user sets the new password in the password reset interface and submits the new password to the verifier.

412. The verifier stores the new password.

Specifically, the verifier stores the account and the corresponding new password, to perform authentication on permission of the user to access the verifier.

It should be understood that, as described above, in this embodiment of this application, the verifier may return the password reset interface to the requester to enable the user to reset the password, provided that the verification information entered by the user is accurate.

However, in this case, once the client (for example, a mobile phone or a computer) of the user is controlled, the client is lost, or the account is cracked, there is a security risk. For example, after an attacker obtains the account of the user, in a process in which the attacker requests password reset by using the client, when the attacker cracks first verification information sent by the verifier, the attacker can reset the password by using the verification information, and then can log in to the account. Consequently, there is a relatively severe security problem.

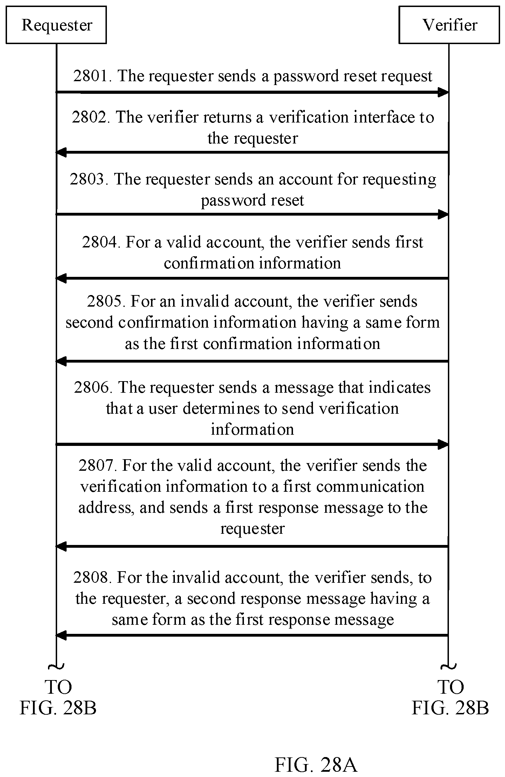

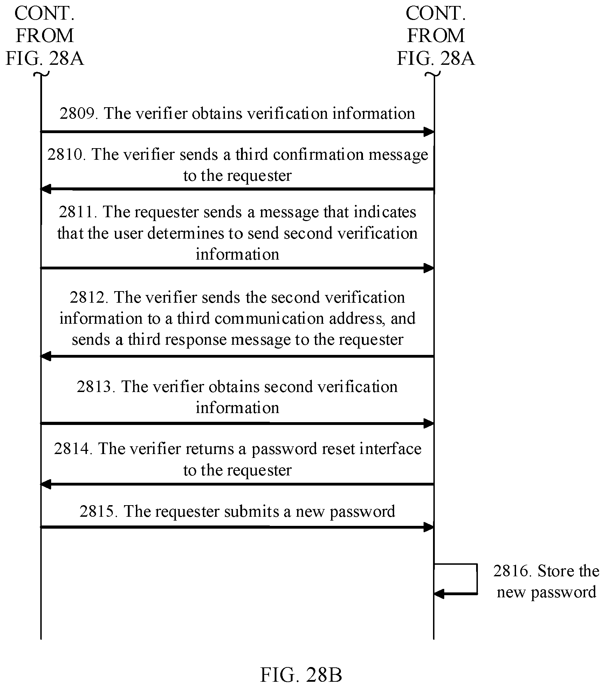

Therefore, in view of this problem, in an embodiment of this application, to improve security performance, a process of performing verification for a plurality of times may be set. For example, as shown in FIG. 28A and FIG. 28B, in this embodiment of this application, after primary verification succeeds, double verification may be performed. Specifically, a method shown in FIG. 28A and FIG. 28B may include the following steps.

2801. A requester sends a password reset request.

2802. A verifier returns a verification interface to the requester.

2803. The requester sends an account entered by a user for requesting password reset.

2804. For a valid account, the verifier sends first confirmation information.

2805. For an invalid account, the verifier sends second confirmation information having a same form as the first confirmation information.

2806. The requester sends a message that indicates that the user determines to send verification information.

2807. For the valid account, the verifier sends the verification information to a first communication address, and sends a first response message to the requester.

2808. For the invalid account, the verifier sends, to the requester, a second response message having a same form as the first response message.

2809. The requester sends verification information to the verifier.

It should be understood that step 2801 to step 2809 correspond to step 401 to step 409. To avoid repetition, details are not described herein again.

2810. The verifier sends a third confirmation information to the requester.

Specifically, the verification information in step 2809 may be first verification information. After the verifier obtains the first verification information sent by the user, if the verifier verifies that the first verification information is accurate, the verifier sends the third confirmation information to the requester. The third confirmation information is used to enable the requester to display, to the user, fifth binding information associated with the account, and request the user to determine whether to send second verification information to a third communication address associated with the account, and the fifth binding information is information that corresponds to the account and that is known by the user.

In other words, in this embodiment of this application, after verification on the first verification information succeeds, the user may be verified again by sending the third confirmation message.

For example, the first verification information is information sent by the verifier to a mobile phone associated with the account, and the second verification information may be information sent to a mailbox associated with the account. Alternatively, the first verification information is information sent by the verifier to a mailbox associated with the account, and the second verification information may be information sent to a mobile phone associated with the account. This embodiment of this application is not limited thereto.

It should be understood that the second verification information is information generated by the verifier, and a definition of the second verification information is similar to that of the first verification information. To avoid repetition, details are not described herein again. It should be understood that the second verification information is different from the first verification information.

It should be understood that a definition of the fifth binding information is similar to that of first binding information. To avoid repetition, details are not described herein again.

2811. The requester sends a message that indicates that the user determines to send the second verification information.

The requester sends, to the service verifier, the message that indicates that the user determines to send the second verification information.

Specifically, a specific process in which the requester sends the message that indicates that the user determines to send the second verification information in step 2811 is similar to that in which the requester sends the message that indicates that the user determines to send the first verification information in step 2806. To avoid repetition, details are not described herein again.

2812. The verifier sends the second verification information to the third communication address, and sends a third response message to the requester.

Specifically, the server verifier sends the second verification information to the third communication address, and sends the third response message to the requester, and the third response message is used to prompt the user that the server verifier has sent the second verification information to the third communication address.

Specifically, a specific process in which the verifier sends the second verification information and the third response message in step 2812 is similar to a process in which the verifier sends the first verification information and the first response message in step 2807. To avoid repetition, details are not described herein again.

2813. The verifier obtains second verification information.

It should be understood that a specific process in which the verifier obtains the second verification information in step 2813 is similar to a process of obtaining the first verification information in step 2809. To avoid repetition, details are not described herein again.

2814. The verifier returns a password reset interface to the requester.

2815. The requester submits a new password.

2816. The verifier stores the new password.

It should be understood that step 2814 to step 2816 correspond to step 410 to step 412. To avoid repetition, details are not described herein again.

Therefore, in this embodiment of this application, an attack from an attacker can be prevented in a process of performing two or more times of verification, so that password reset security is improved.

It should be understood that, with reference to FIG. 1 to FIG. 28A and FIG. 28B, the foregoing describes an example in which first binding information and second binding information are anonymously displayed. A common user can identify, by using confirmation information about whether to send verification information to a communication address associated with an account, whether the entered account belongs to the common user. In this way, interference to another user is avoided. If the user enters an incorrect account, a server still returns fake confirmation information, so that a hacker attacker cannot identify, by using the confirmation information, whether the entered account is valid, so as to prevent an "account enumeration" attack. However, the hacker may enter all accounts by brute force, and then click/tap "determine to send verification information" or "determine to obtain verification information", to send verification information to a valid account in the accounts entered by brute force, resulting in interference to the common user.

Therefore, to prevent the hacker from entering the accounts by brute force to cause interference to the common user, when the confirmation information is returned, the user may be required to enter known preset information (for example, enter an anonymous part of the preset information) in the embodiments of this application. The server triggers a real send operation only when the account is valid and entered preset information is correct. Therefore, interference caused by the brute-force cracking to the common user can be avoided in this application.

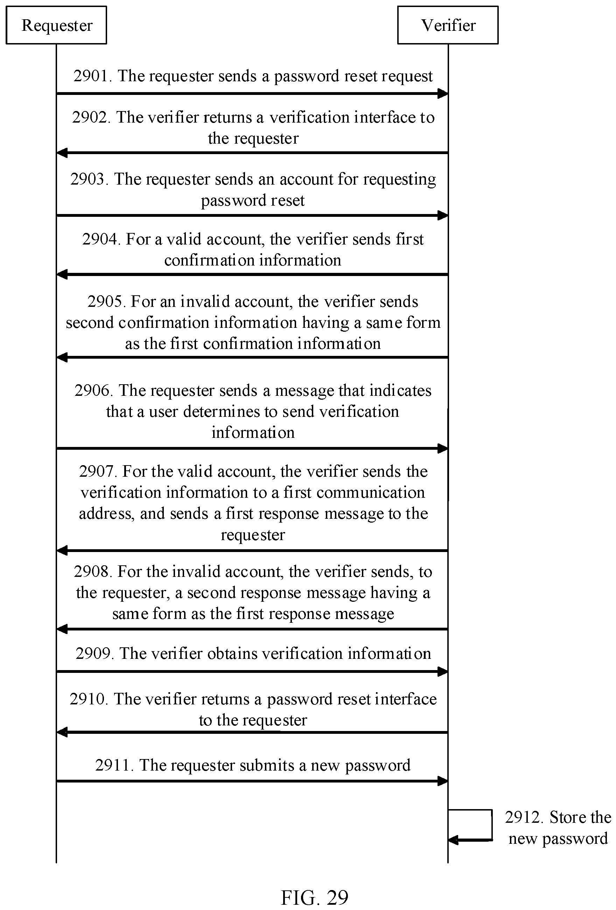

Specifically, the following provides a detailed description with reference to FIG. 29.

As shown in FIG. 29, in this embodiment of this application, after a user submits an account for changing a password, the user is required to determine whether to send verification information to an anonymously displayed address bound to the account, and the user is required to supplement an anonymous part. Specifically, a method shown in FIG. 29 may include the following steps.

2901. A requester sends a password reset request.

2902. A verifier returns a verification interface to the requester.

2903. The requester sends an account entered by a user for requesting password reset.

It should be understood that step 2901 to step 2903 correspond to step 401 to step 403. To avoid repetition, details are not described herein again.

2904. For a valid account, the verifier sends first confirmation information.

The first confirmation information is specifically used to enable the requester to request the user to determine whether to send verification information to an anonymously displayed first communication address associated with the account, and enable the requester to request the user to enter an anonymous part of the first communication address.

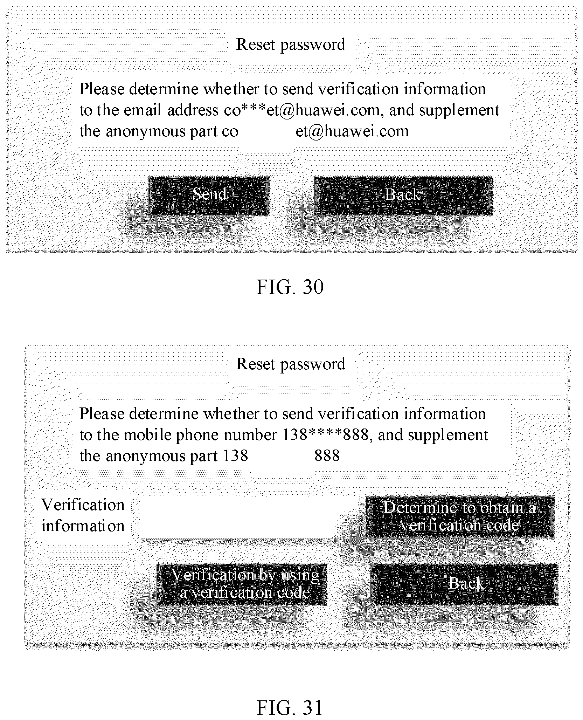

For example, as shown in FIG. 30, when the account is valid, if the first communication address is corenet@huawei.com, the requester displays "please determine whether to send verification information to an email address co^{∗∗∗}et@huawei.com, and supplement an anonymous part co^{∗∗∗}et@huawei.com" to the user.

For another example, as shown in FIG. 31, when the account is valid, if the first communication address is 13812345888, the requester displays "please determine whether to send verification information to a mobile phone number 138^{∗∗∗∗}888, and supplement an anonymous part 13^{∗∗∗}8^{∗∗∗}888" to the user.

2905. For an invalid account, the verifier sends second confirmation information having a same form as the first confirmation information.

The second confirmation information is specifically used to enable the requester to request the user to determine whether to send verification information to a second communication address associated with the account, and enable the requester to request the user to enter an anonymous part of the second communication address.

It should be understood that the second communication address is in a one-to-one correspondence with the invalid account entered by the user, and the second communication address is generated by the verifier based on the invalid account. Specifically, for a manner of generating the second communication address, refer to the foregoing description. Details are not described herein again.

2906. The requester sends a message that indicates that the user determines to send the verification information.

The verifier obtains the message that is sent by the requester and that indicates that the user determines to send the verification information, and the message that indicates that the user determines to send the verification information carries the anonymous part entered by the user.

When the account is the valid account and the anonymous part entered by the user is correct, the verifier sends a sixth confirmation message to the requester, the sixth confirmation message is used to enable the requester to request the user to confirm sixth binding information associated with the account, and the sixth binding information is information that corresponds to the account and that is known by the user.

After the verifier obtains a message that is sent by the requester and that indicates that the user confirms the sixth binding information, the verifier sends the verification information to the first communication address, and sends a sixth response message to the requester, and the sixth response message is used to enable the requester to prompt the user that the verifier has sent the verification information to the first communication address.

Alternatively, the verifier obtains the message that is sent by the requester and that indicates that the user determines to send the verification information, and the message that indicates that the user determines to send the verification information carries the anonymous part entered by the user.

When the account is the invalid account or the anonymous part entered by the user is incorrect, the verifier generates, based on the anonymous part entered by the user and/or the account, seventh binding information corresponding to the account, and sends a seventh confirmation message to the requester, the seventh confirmation message is used to enable the requester to request the user to confirm the seventh binding information associated with the account, and the seventh binding information and the sixth binding information have a same form.

After the verifier obtains a message that is sent by the requester and that indicates that the user confirms the seventh binding information, the verifier directly sends, to the requester, a seventh response message having a same form as the sixth response message, and the seventh response message is used to enable the requester to prompt the user that the verifier has sent the verification information to the second communication address.

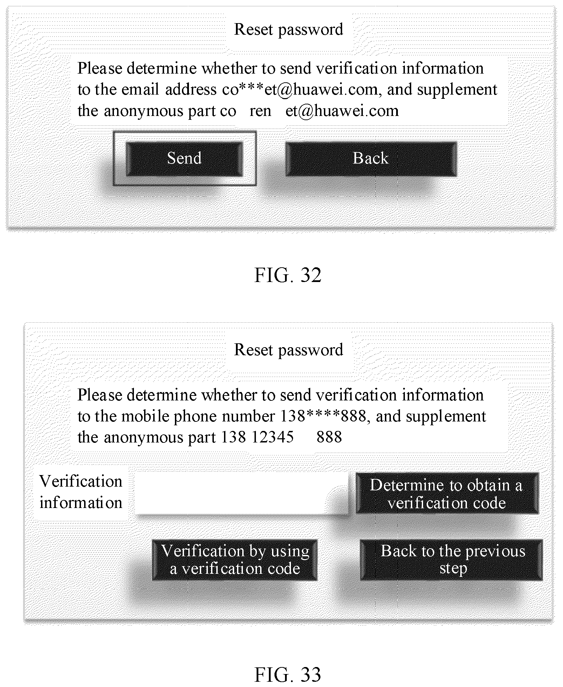

Specifically, as shown in FIG. 32 or FIG. 33, the user enters the anonymous part and clicks/taps "confirm" to send the verification information. Then, the requester displays, to the user, information bound to the account, so that the user performs double confirmation. Optionally, if the communication address associated with the account in step 2904 or step 2905 is an email address, the information bound to the account in step 2906 is a mobile phone number. Alternatively, if the communication address associated with the account in step 2904 or step 2905 is a mobile phone number, the information bound to the account in step 2906 is an email address.

Optionally, the information bound to the account in step 2906 may alternatively be other information, for example, anonymously displayed information such as a name, an occupation, or an employee ID of the user.

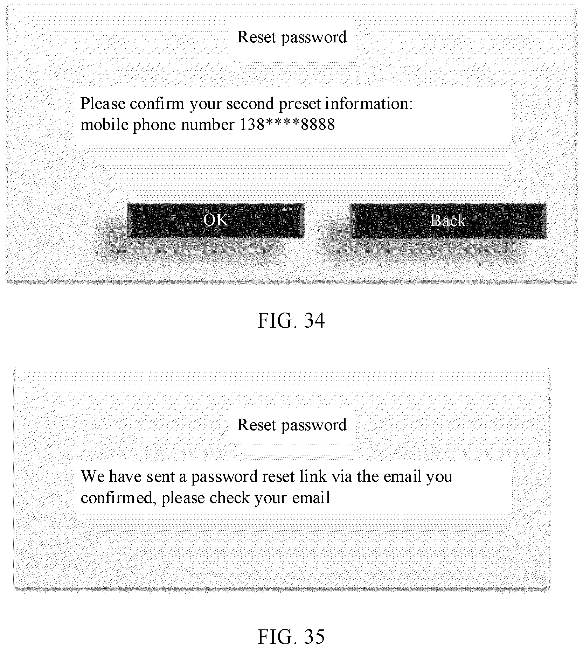

As shown in FIG. 34, the requester displays the following information: "please confirm your second preset information (which corresponds to the sixth binding information or the seventh binding information in the foregoing description): a mobile phone number 138^{∗∗∗∗}8888" to the user.

It should be understood that, the sixth binding information is preset information, and may be information known by the user, and the seventh binding information is information that is generated by the verifier and that is in a one-to-one correspondence with the account and/or the anonymous part that are/is entered by the user.

After the user clicks/taps "confirm" again, if both the account and the anonymous part entered by the user are correct, the verifier sends the verification information to the first communication address corresponding to the account, and the requester displays "verification information has been sent" to the user.

Alternatively, if the account or the anonymous part entered by the user are incorrect, the verifier sends no verification information, and the requester displays "verification information has been sent" to the user.

Specifically, corresponding to the valid account, for FIG. 30, as shown in FIG. 35, the requester displays the following information: "we have sent a password reset link via the email you confirmed, please check your email" to the user.

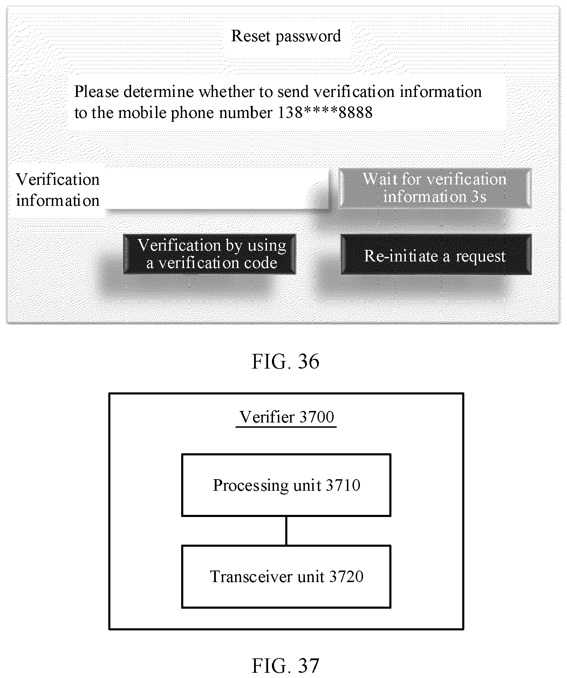

For another example, for FIG. 31, the requester displays, to the user, information shown in FIG. 36, namely, "wait for verification information".

For example, for the invalid account, the verifier sends no verification information, and the requester displays information similar to that shown in FIG. 35 or FIG. 36.

Specifically, the verifier receives the anonymous part entered by the user. If the entered anonymous part and account are both valid, the sixth confirmation message is sent, so that the user can confirm whether the previously entered preset information or account is correct. If the user finds that the sixth binding information is not information that is previously bound to the valid account, the user may confirm that previous input may be incorrect, so that the user can perform modification in a timely manner for re-entering. If the preset information or the account entered by the user is incorrect, a service returns, to the user, fake confirmation message(namely, the seventh confirmation message) that has a same form as the sixth confirmation message and that is in a one-to-one correspondence with the incorrect account, so that external cracking can be avoided.

Alternatively, in actual application, after the user confirms the verification information sent by the verifier, the user may not need to further confirm another piece of binding information. In other words, the step shown in FIG. 32 may not be performed.

Specifically, the verifier obtains the message that is sent by the requester and that indicates that the user determines to send the verification information, and the message that indicates that the user determines to send the verification information carries the anonymous part entered by the user.

When the account is the valid account and the anonymous part entered by the user is correct, the verifier sends the verification information to the first communication address, and sends a fourth response message to the requester, and the fourth response message is used to enable the requester to prompt the user that the verifier has sent the verification information to the first communication address.

For example, for FIG. 30, as shown in FIG. 35, the requester displays the following information: "we have sent a password reset link via the email you confirmed, please check your email" to the user.

For another example, for FIG. 31, the requester displays, to the user, information shown in FIG. 36, namely, "wait for verification information".

Alternatively, when the account is the invalid account or the anonymous part entered by the user is incorrect, the verifier directly sends, to the requester, a fifth response message having a same form as the fourth response message, and the fifth response message is used to enable the requester to prompt the user that the verifier has sent the verification information to the second communication address. For example, for the invalid account, information similar to that shown in FIG. 35 or FIG. 36 is displayed.

In this case, the user performs no double confirmation, and therefore, a quantity of interaction times can be reduced, and a total password reset time can be reduced.

2907. For the valid account, the verifier sends the verification information to the first communication address, and sends a first response message to the requester.

Specifically, the requester displays, to the user, content shown in FIG. 33 or FIG. 34.

2908. For the invalid account, the verifier sends, to the requester, a second response message having a same form as the first response message.

Specifically, the requester displays, to the user, content shown in FIG. 33 or FIG. 34.

2909. The verifier obtains verification information.

2910. The verifier returns a password reset interface to the requester.

2911. The requester submits a new password.

2912. The verifier stores the new password.

It should be understood that step 2907 to step 2912 correspond to step 407 to step 412. To avoid repetition, details are not described herein again.

Therefore, in this embodiment of this application, an attack from an attacker can be prevented in a process of performing two or more times of verification, so that password reset security is improved.

It should be understood that the foregoing examples in FIG. 1 to FIG. 36 are merely intended to help a person skilled in the art understand the embodiments of this application, but are not intended to limit the embodiments of this application to a specific value or a specific scenario in the examples. A person skilled in the art definitely can make various equivalent modifications or changes based on the examples shown in FIG. 1 to FIG. 36, and such modifications or changes also fall within the scope of the embodiments of this application. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

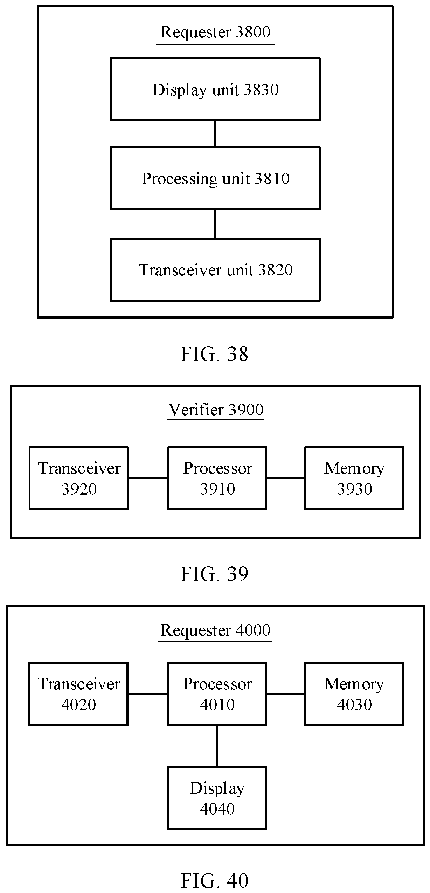

The foregoing describes the password reset method in the embodiments of this application in detail with reference to FIG. 1 to FIG. 36. The following describes a verifier in the embodiments of this application with reference to FIG. 37 and FIG. 39, and describes a requester in the embodiments of this application with reference to FIG. 38 and FIG. 40.

FIG. 37 is a schematic block diagram of a verifier according to an embodiment of this application. The verifier is applied to a system including a requester and the verifier, and the requester needs to request, by using an account and a password, the verifier to verify an identity. The verifier 3700 shown in FIG. 37 includes a processing unit 3710 and a transceiver unit 3720.

Specifically, the transceiver unit is configured to receive an account sent by the requester for requesting password reset.

When it is determined that the account is a valid account, the transceiver unit is further configured to send first confirmation information to the requester, where the first confirmation information is used to enable the requester to display, to a user, first binding information associated with the account, and request the user to determine whether to send verification information to a first communication address associated with the account, and the first binding information is information that corresponds to the account and that is known by the user.

Alternatively, when it is determined that the account is an invalid account, the processing unit is configured to generate, based on the account, second binding information corresponding to the account, and the transceiver unit is further configured to send, to the requester, second confirmation information having a same form as the first confirmation information, where the second confirmation information is used to enable the requester to display the second binding information to the user, and request the user to determine whether to send verification information to a second communication address corresponding to the account, and the second binding information and the first binding information have a same form.

Therefore, in this application, corresponding fake confirmation information (namely, the second confirmation information) whose form is consistent with that of the first confirmation information is generated for the invalid account. Because the form of the fake confirmation information needs to be consistent with a form of confirmation information corresponding to a real account, a hacker cannot determine validity of the entered account by using the confirmation information. Therefore, in this embodiment of this application, a problem that the hacker enumerates valid accounts by using prompt information "invalid account" returned by a server can be resolved, and system security performance can be improved.

In addition, in this application, information known by the user or preset information is used as confirmation information. For a common user, if an incorrect account is entered, the common user may identify, by using known information or preset information (namely, the foregoing first binding information), that returned information does not belong to the common user. Therefore, in this embodiment of this application, a problem that the user cannot perceive, in a timely manner, whether "an invalid account is entered" or "an account of another user is mistakenly entered" can also be resolved, and user experience can be improved.

Optionally, in another embodiment, the first binding information is the first communication address, and the second binding information is the second communication address.

Optionally, in another embodiment, the transceiver unit is further configured to:
obtain a message that is sent by the requester and that indicates that the user determines to send the verification information; and
when the account is the valid account, send the verification information to the first communication address, and send a first response message to the requester, where the first response message is used to prompt the user that the verifier has sent the verification information to the first communication address; or
when the account is the invalid account, directly send, to the requester, a second response message having a same form as the first response message, where the second response message is used to prompt the user that the verifier has sent the verification information to the second communication address.

Optionally, in another embodiment, in addition to being used to enable the requester to display, to the user, the first binding information associated with the account, and request the user to determine whether to send the verification information to the first communication address associated with the account, the first confirmation information is further used to enable the requester to display, to the user, third binding information associated with the account, and the third binding information is information that corresponds to the account and that is known by the user; and
in addition to being used to enable the requester to display, to the user, the second binding information associated with the account, and request the user to determine whether to send the verification information to the second communication address, the second confirmation information is further used to enable the requester to display, to the user, fourth binding information corresponding to the account, and the fourth binding information is information that is generated by the processing unit and that has a same form as the third binding information.

Optionally, in another embodiment, when it is determined that the account is the invalid account, the processing unit is specifically configured to generate, based on the account and a first key, the second binding information corresponding to the account.

Optionally, in another embodiment, the processing unit is specifically configured to: obtain the first key;
combine the first key and the account, to generate combined data; and
generate the second binding information based on the combined data by using a first function algorithm, where the first function algorithm is used to generate output information uniquely corresponding to one piece of input information.

Optionally, in another embodiment, the first communication address and the second communication address are anonymous information;
the first confirmation information is specifically used to enable the requester to request the user to determine whether to send the verification information to the first communication address associated with the account, and enable the requester to request the user to enter an anonymous part of the first communication address; and
the second confirmation information is specifically used to enable the requester to request the user to determine whether to send the verification information to the second communication address associated with the account, and enable the requester to request the user to enter an anonymous part of the second communication address.

Optionally, in another embodiment, the transceiver unit is further configured to:
obtain a message that is sent by the requester and that indicates that the user determines to send the verification information, where the message that indicates that the user determines to send the verification information carries the anonymous part entered by the user; and
when the account is the valid account and the anonymous part entered by the user is correct, send the verification information to the first communication address, and send a fourth response message to the requester, where the fourth response message is used to enable the requester to prompt the user that the verifier has sent the verification information to the first communication address; or
when the account is the invalid account or the anonymous part entered by the user is incorrect, directly send, to the requester, a fifth response message having a same form as the fourth response message, where the fifth response message is used to enable the requester to prompt the user that the verifier has sent the verification information to the second communication address.

Optionally, in another embodiment, the transceiver unit is further configured to:
obtain a message that is sent by the requester and that indicates that the user determines to send the verification information, where the message that indicates that the user determines to send the verification information carries the anonymous part entered by the user;
when the account is the valid account and the anonymous part entered by the user is correct, send a sixth confirmation message to the requester, where the sixth confirmation message is used to enable the requester to request the user to confirm sixth binding information associated with the account, and the sixth binding information is information that corresponds to the account and that is known by the user; and
after obtaining a message that is sent by the requester and that indicates that the user confirms the sixth binding information, send the verification information to the first communication address, and send a sixth response message to the requester, where the sixth response message is used to enable the requester to prompt the user that the verifier has sent the verification information to the first communication address.

Alternatively, the transceiver unit is further configured to:
obtain a message that is sent by the requester and that indicates that the user determines to send the verification information, where the message that indicates that the user determines to send the verification information carries the anonymous part entered by the user;
when the account is the invalid account or the anonymous part entered by the user is incorrect, generate, based on the anonymous part entered by the user and/or the account, seventh binding information corresponding to the account, and send a seventh confirmation message to the requester, where the seventh confirmation message is used to enable the requester to request the user to confirm the seventh binding information associated with the account, and the seventh binding information and the sixth binding information have a same form; and
after obtaining a message that is sent by the requester and that indicates that the user confirms the seventh binding information, directly send, to the requester, a seventh response message having a same form as the sixth response message, where the seventh response message is used to enable the requester to prompt the user that the verifier has sent the verification information to the second communication address.

Optionally, in another embodiment, the processing unit is further configured to: when the verifier determines that a quantity of consecutive times for which the user requests password reset for the invalid account by using the requester reaches a preset threshold, lock the request from the requester to the verifier.

Optionally, in another embodiment, the transceiver unit is further configured to:
obtain verification information sent by the user;
when it is verified that the verification information is accurate, return a password reset interface to the requester; and
obtain a new password that is submitted by the requester and that is entered by the user by using the password reset interface.

Optionally, in another embodiment, the verification information is first verification information, and when the account is the valid account, the transceiver unit is further configured to:
obtain the first verification information sent by the user; and
when the verifier verifies that the first verification information is accurate, send third confirmation information to the requester, where the third confirmation information is used to enable the requester to display, to the user, fifth binding information associated with the account, and request the user to determine whether to send second verification information to a third communication address associated with the account, and the fifth binding information is information that corresponds to the account and that is known by the user.

Optionally, in another embodiment, the transceiver unit is further configured to:
obtain a message that is sent by the requester and that indicates that the user determines to send the second verification information; and
send the second verification information to the third communication address, and send a third response message to the requester, where the third response message is used to prompt the user that the verifier has sent the second verification information to the third communication address.

Optionally, in another embodiment, the transceiver unit is further configured to:
obtain the second verification information sent by the user;
when it is verified that the second verification information is accurate, return a password reset interface to the requester; and
obtain a new password that is submitted by the requester and that is entered by the user by using the password reset interface.

Optionally, in another embodiment, all of the first binding information, the second binding information, and the third binding information are anonymous information.

Optionally, in another embodiment, the password includes a personal identification number PIN, a key, a private key, or a character string specified by the user; and
the account includes an email address, a mobile phone number, an account of a third-party application, or a character string registered by the user with the verifier.

It should be understood that the verifier shown in FIG. 37 can implement the processes related to the verifier in the method embodiments in FIG. 1 to FIG. 36. Operations and/or functions of the modules in the verifier 3700 are respectively used to implement corresponding processes in the method embodiments in FIG. 1 to FIG. 36. For details, refer to the descriptions in the method embodiments. To avoid repetition, detailed descriptions are appropriately omitted herein.

FIG. 38 is a schematic block diagram of a requester according to an embodiment of this application. The requester is applied to a system including the requester and a verifier, and the requester needs to request, by using an account and a password, the verifier to verify an identity. The requester 3800 shown in FIG. 38 includes a processing unit 3810, a transceiver unit 3820, and a display unit 3830.

Specifically, the processing unit is configured to control the transceiver unit to: send, to the verifier, an account for requesting password reset; and
when the verifier determines that the account is a valid account, receive first confirmation information sent by the verifier, where the first confirmation information is used to enable the display unit to display, to a user, first binding information associated with the account, and request the user to determine whether to send verification information to a first communication address associated with the account, and the first binding information is information that corresponds to the account and that is known by the user; or
when the verifier determines that the account is an invalid account, receive second confirmation information that is sent by the verifier and that has a same form as the first confirmation information, where the second confirmation information is used to enable the display unit to display the second binding information to the user, and request the user to determine whether to send verification information to a second communication address corresponding to the account, the second binding information is information that is generated by the verifier based on the account and that corresponds to the account, and the second binding information and the first binding information have a same form.

Therefore, in this application, corresponding fake confirmation information (namely, the second confirmation information) whose form is consistent with that of the first confirmation information is generated for the invalid account. Because the form of the fake confirmation information needs to be consistent with a form of confirmation information corresponding to a real account, a hacker cannot determine validity of the entered account by using the confirmation information. Therefore, in this embodiment of this application, a problem that the hacker enumerates valid accounts by using prompt information "invalid account" returned by a server can be resolved, and system security performance can be improved.

In addition, in this application, information known by the user or preset information is used as confirmation information. For a common user, if an incorrect account is entered, the common user may identify, by using known information or preset information (namely, the foregoing first binding information), that returned information does not belong to the common user. Therefore, in this embodiment of this application, a problem that the user cannot perceive, in a timely manner, whether "an invalid account is entered" or "an account of another user is mistakenly entered" can also be resolved, and user experience can be improved.

Optionally, in another embodiment, the first binding information is the first communication address, and the second binding information is the second communication address.

Optionally, in another embodiment, the transceiver unit is further configured to:
send, to the verifier, a message that indicates that the user determines to send the verification information; and
when the account is the valid account, obtain a first response message sent by the verifier, where the first response message is used to prompt the user that the verifier has sent the verification information to the first communication address, and the first response message is sent after the verifier sends the verification information to the first communication address; or
when the account is the invalid account, obtain a second response message that is sent by the verifier and that has a same form as the first response message, where the second response message is used to prompt the user that the verifier has sent the verification information to the second communication address, and the second response message is directly sent after the verifier obtains the message that indicates that the user determines to send the verification information.

Optionally, in another embodiment, in addition to being used to enable the display unit to display, to the user, the first binding information associated with the account, and request the user to determine whether to send the verification information to the first communication address associated with the account, the first confirmation information is further used to enable the display unit to display, to the user, third binding information associated with the account, and the third binding information is information that corresponds to the account and that is known by the user; and
in addition to being used to enable the display unit to display, to the user, the second binding information associated with the account, and request the user to determine whether to send the verification information to the second communication address, the second confirmation information is further used to enable the display unit to display, to the user, fourth binding information that corresponds to the account and that has a same form as the first binding information, and the fourth binding information is information that is generated by the verifier and that has a same form as the third binding information.

Optionally, in another embodiment, the first communication address and the second communication address are anonymous information;
the first confirmation information is specifically used to enable the requester to request the user to determine whether to send the verification information to the first communication address associated with the account, and enable the requester to request the user to enter an anonymous part of the first communication address; and
the second confirmation information is specifically used to enable the requester to request the user to determine whether to send the verification information to the second communication address associated with the account, and enable the requester to request the user to enter an anonymous part of the second communication address.

Optionally, in another embodiment, the transceiver unit is further configured to:
send, to the verifier, a message that indicates that the user determines to send the verification information, where the message that indicates that the user determines to send the verification information carries the anonymous part entered by the user; and
receive a fourth response message sent by the verifier, where the fourth response message is sent by the verifier when the account is the valid account and the anonymous part entered by the user is correct and after the verifier sends the verification information to the first communication address, and the fourth response message is used to enable the requester to prompt the user that the verifier has sent the verification information to the first communication address; or
receive a fifth response message that is directly sent by the verifier and that has a same form as the fourth response message, where the fifth response message is sent by the verifier when the account is the invalid account or the anonymous part entered by the user is incorrect, and the fifth response message is used to enable the requester to prompt the user that the verifier has sent the verification information to the second communication address.

Optionally, in another embodiment, the transceiver unit is further configured to:
send, to the verifier, a message that indicates that the user determines to send the verification information, where the message that indicates that the user determines to send the verification information carries the anonymous part entered by the user;
receive a sixth confirmation message sent by the verifier, where the sixth confirmation message is sent by the verifier when the account is the valid account and the anonymous part entered by the user is correct, the sixth confirmation message is used to enable the requester to request the user to confirm sixth binding information associated with the account, and the sixth binding information is information that corresponds to the account and that is known by the user;
send, to the verifier, a message that indicates that the user confirms the sixth binding information; and
receive a sixth response message sent by the verifier, where the sixth response message is sent after the verifier sends the verification information to the first communication address, and the sixth response message is used to enable the requester to prompt the user that the verifier has sent the verification information to the first communication address.

Alternatively, the transceiver unit is further configured to:
send, to the verifier, a message that indicates that the user determines to send the verification information, where the message that indicates that the user determines to send the verification information carries the anonymous part entered by the user;
receive a seventh confirmation message sent by the verifier, where the seventh confirmation message is sent by the verifier when the account is the invalid account or the anonymous part entered by the user is incorrect, the seventh confirmation message is used to enable the requester to request the user to confirm seventh binding information associated with the account, the seventh binding information and the sixth binding information have a same form, and the seventh binding information is generated by the verifier based on the anonymous part entered by the user and/or the account;
send, to the verifier, a message that indicates that the user confirms the seventh binding information; and
receive a seventh response message that is directly sent by the verifier and that has a same form as the sixth response message, where the seventh response message is used to enable the requester to prompt the user that the verifier has sent the verification information to the second communication address.

Optionally, in another embodiment, the transceiver unit is further configured to:
obtain a password reset interface sent by the verifier, where the password reset interface is sent after the verifier verifies that verification information sent by the user is accurate; and
submit, to the verifier, a new password entered by the user by using the password reset interface.

Optionally, in another embodiment, the verification information is first verification information, and when the account is the valid account, the transceiver unit is further configured to:
receive third confirmation information sent by the verifier, where the third confirmation information is used to enable the requester to display, to the user, fifth binding information associated with the account, and request the user to determine whether to send second verification information to a third communication address associated with the account, the fifth binding information is information that corresponds to the account and that is known by the user, and the third confirmation information is sent after the verifier obtains the first verification information sent by the user.

Optionally, in another embodiment, the transceiver unit is further configured to:
send, to the verifier, a message that indicates that the user determines to send the second verification information; and
receive a third response message sent by the verifier, where the third response message is used to prompt the user that the verifier has sent the second verification information to the third communication address, and the third response message is sent after the verifier sends the second verification information to the third communication address.

Optionally, in another embodiment, the transceiver unit is further configured to:
obtain a password reset interface sent by the verifier, where the password reset interface is sent after the verifier verifies that the second verification information sent by the user is accurate; and
submit, to the verifier, a new password entered by the user by using the password reset interface.

Optionally, in another embodiment, all of the first binding information, the second binding information, and the third binding information are anonymous information.

Optionally, in another embodiment, the password includes a personal identification number PIN, a key, a private key, or a character string specified by the user; and
the account includes an email address, a mobile phone number, an account of a third-party application, or a character string registered by the user with the verifier.

It should be understood that the requester shown in FIG. 38 can implement the processes related to the requester in the method embodiments in FIG. 1 to FIG. 36. Operations and/or functions of the modules in the requester 3800 are respectively used to implement corresponding processes in the method embodiments in FIG. 1 to FIG. 36. For details, refer to the descriptions in the method embodiments. To avoid repetition, detailed descriptions are appropriately omitted herein.

FIG. 39 is a schematic block diagram of a verifier 3900 according to an embodiment of this application. Specifically, as shown in FIG. 39, the verifier 3900 includes a processor 3910 and a transceiver 3920, and the processor 3910 is connected to the transceiver 3920. Optionally, the verifier 3900 further includes a memory 3930. The memory 3930 is connected to the processor 3910. The processor 3910, the memory 3930, and the transceiver 3920 communicate with each other by using an internal connection path, to transmit a control signal and/or a data signal. The memory 3930 may be configured to store an instruction. The processor 3910 is configured to: execute the instruction stored in the memory 3930, and control the transceiver 3920 to receive or send information or a signal. The processor 3910 can complete, by executing the instruction in the memory 3930, all processes related to the verifier in the method embodiments in FIG. 1 to FIG. 36. To avoid repetition, details are not described herein again.

It should be understood that the verifier 3900 may correspond to the verifier 3700 in FIG. 37, a function of the processing unit 3710 in the verifier 3700 may be implemented by the processor 3910, a function of the transceiver unit 3720 may be implemented by the transceiver 3920, and a function of the display unit 3730 may be implemented by the display 3940.

Therefore, in this application, corresponding fake confirmation information (namely, second confirmation information) whose form is consistent with that of first confirmation information is generated for an invalid account. Because the form of the fake confirmation information needs to be consistent with a form of confirmation information corresponding to a real account, a hacker cannot determine validity of an entered account by using the confirmation information. Therefore, in this embodiment of this application, a problem that the hacker enumerates valid accounts by using prompt information "invalid account" returned by a server can be resolved, and system security performance can be improved.

In addition, in this application, information known by a user or preset information is used as confirmation information. For a common user, if an incorrect account is entered, the common user may identify, by using known information or preset information (namely, the foregoing first binding information), that returned information does not belong to the common user. Therefore, in this embodiment of this application, a problem that the user cannot perceive, in a timely manner, whether "an invalid account is entered" or "an account of another user is mistakenly entered" can also be resolved, and user experience can be improved.

FIG. 40 is a schematic block diagram of a requester 4000 according to an embodiment of this application. Specifically, as shown in FIG. 40, the requester 4000 includes a processor 4010 and a transceiver 4020, and the processor 4010 is connected to the transceiver 4020. Optionally, the requester 4000 further includes a memory 4030. The memory 4030 is connected to the processor 4010. Optionally, the requester 4000 may further include a display 4040. The processor 4010, the memory 4030, the display 4040, and the transceiver 4020 communicate with each other by using an internal connection path, to transmit a control signal and/or a data signal. The memory 4030 may be configured to store an instruction. The display 4040 is configured to display information to a user. The processor 4010 is configured to: execute the instruction stored in the memory 4030, and control the transceiver 4020 to receive or send information or a signal. The controller 4010 can complete, by executing the instruction in the memory 4030, all processes related to the requester in the method embodiments in FIG. 1 to FIG. 36. To avoid repetition, details are not described herein again.

It should be understood that the requester 4000 may correspond to the requester 3800 in FIG. 38, a function of the processing unit 3810 in the requester 3800 may be implemented by the processor 4010, and a function of the transceiver unit 3820 may be implemented by the transceiver 4020.

Therefore, in this application, corresponding fake confirmation information (namely, second confirmation information) whose form is consistent with that of first confirmation information is generated for an invalid account. Because the form of the fake confirmation information needs to be consistent with a form of confirmation information corresponding to a real account, a hacker cannot determine validity of an entered account by using the confirmation information. Therefore, in this embodiment of this application, a problem that the hacker enumerates valid accounts by using prompt information "invalid account" returned by a server can be resolved, and system security performance can be improved.

In addition, in this application, information known by a user or preset information is used as confirmation information. For a common user, if an incorrect account is entered, the common user may identify, by using known information or preset information (namely, the foregoing first binding information), that returned information does not belong to the common user. Therefore, in this embodiment of this application, a problem that the user cannot perceive, in a timely manner, whether "an invalid account is entered" or "an account of another user is mistakenly entered" can also be resolved, and user experience can be improved.

It should be understood that the requester 4000 may further include another component, for example, components such as an input unit, a communications unit, and a peripheral interface. The components perform communication by using one or more buses. A person skilled in the art may understand that a structure of the requester shown in the figure constitutes no limitation on this application. The structure may be a bus structure or a star structure, and may alternatively include more or fewer components than those shown in the figure, combine some components, or have different component arrangements in an implementation of this application.

The input unit is configured to: implement interaction between the user and the requester, and/or enter information to a mobile terminal. For example, the input unit may receive digital or character information entered by the user, to generate signal input related to a user setting or function control. In a specific implementation of this application, the input unit may be a touch panel, may be another human-machine interaction interface such as a physical input key or a microphone, or may be another external information capture apparatus such as a camera. The touch panel, also referred to as a touchscreen or a touch control screen, may collect a touch operation action or an approaching operation action performed by the user on the touch panel, such as an operation action performed by the user on the touch panel or at a position near the touch panel by using any appropriate object or accessory such as a finger or a stylus, and drive a corresponding connection apparatus according to a preset program. Optionally, the touch panel may include two parts: a touch detection apparatus and a touch controller. The touch detection apparatus detects a touch operation of the user, converts the detected touch operation into an electrical signal, and transmits the electrical signal to the touch controller. The touch controller receives the electrical signal from the touch detection apparatus, converts the electrical signal into contact coordinates, and then sends the contact coordinates to a processing unit. The touch controller may further receive a command sent by the processing unit and execute the command. In addition, the touch panel may be implemented by using a plurality of types, such as a resistive type, a capacitive type, an infrared (Infrared) type, and a surface acoustic wave type. In another implementation of this application, the physical input key used by the input unit may include but is not limited to one or more of a physical keyboard, a function key (such as a volume control key or an on/off key), a trackball, a mouse, and a joystick. The input unit in a form of a microphone may collect voice that is input by the user or from an environment and convert the voice into a command that can be executed by the processing unit and that is in a form of an electrical signal.

The processor is a control center of the requester, is connected to all parts of the entire requester by using various interfaces and lines, and performs various functions of the requester and/or processes data by running or executing a software program and/or a module stored in a storage unit and by invoking data stored in the storage unit.

The communications unit is configured to set up a communication channel, so that the requester is connected to a verifier by using the communication channel and exchanges data with the verifier by using the communication channel.

The display 4040 may also be referred to as an output unit, and the output unit may include but is not limited to an image output unit, a sound output unit, and a touch output unit. The image output unit is configured to output a text, an image, and/or a video. The image output unit may include a display panel, for example, a display panel configured in a form of an LCD (Liquid Crystal Display, liquid crystal display), an OLED (Organic Light-Emitting Diode, organic light-emitting diode), or a field emission display (field emission display, FED for short). Alternatively, the image output unit may include a reflective display, such as an electrophoretic (electrophoretic) display or a display using an interferometric modulation of light (Interferometric Modulation of Light) technology. The image output unit may include a single display or a plurality of displays of different sizes. In a specific implementation of this application, the touch panel used for the input unit can also serve as the display panel of the output unit. For example, after detecting a touch gesture operation or an approaching gesture operation on the touch panel, the touch panel transmits the operation to the processing unit to determine a type of a touch event. Then, the processing unit provides a corresponding visual output on the display panel based on the type of the touch event. The input unit and the output unit are used as two independent components to implement input and output functions of the mobile terminal. However, in some embodiments, the touch panel and the display panel may be integrated to implement the input and output functions of the mobile terminal. For example, the image output unit may display various graphical user interfaces (Graphical User Interface, GUI for short) as virtual control components, including but not limited to a window, a scroll bar, an icon, and a scrap book, to be operated by the user in a touch manner.

It should be noted that the processor (for example, the processors in FIG. 39 and FIG. 40) in the embodiments of this application may be an integrated circuit chip that has a signal processing capability. In an implementation process, steps in the foregoing method embodiments can be completed by using a hardware integrated logical circuit in the processor, or an instruction in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in the embodiments of this application. The general-purpose processor may be a microprocessor, or the processor may be any conventional processor or the like. Steps of the methods disclosed with reference to the embodiments of this application may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor.

It may be understood that the memory (for example, the memories in FIG. 39 and FIG. 40) in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and the volatile memory is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, the memory in the system and method described in this specification includes but is not limited to these memories and any memory of another proper type.

The application program includes any application installed on the requester, including but not limited to a browser, an email, an instant messaging service, text processing, keyboard virtualization, a window widget (Widget), encryption, digital copyright management, speech recognition, voice replication, positioning (for example, a function provided by a global positioning system), music playing, and the like.

It should be understood that the transceiver unit or the transceiver in the embodiments of this application may also be referred to as a communications unit.

An embodiment of this application further provides a processing apparatus, including a processor and an interface. The processor is configured to perform the password reset method in any one of the foregoing method embodiments.

It should be understood that, the processing apparatus may be a chip. For example, the processing apparatus may be a field programmable gate array (FieldProgrammable Gate Array, FPGA), an application-specific integrated circuit (Application Specific Integrated Circuit, ASIC), a system on chip (System on Chip, SoC), a central processing unit (Central Processing Unit, CPU), a network processor (Network Processor, NP), a digital signal processor (Digital Signal Processor, DSP), a micro controller unit (Micro Controller Unit, MCU), a programmable logic device (Programmable Logic Device, PLD), or another integrated chip.

An embodiment of this application further provides a system. The system includes the foregoing requester and verifier, and the requester needs to request, by using an account and a password, the verifier to verify an identity.

An embodiment of this application further provides a computer-readable medium. The computer-readable medium stores a computer program. When the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When the embodiments are implemented by using software, all or some of the embodiments may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

It should be understood that the foregoing processing apparatus may be a chip. The processor may be implemented by hardware, or may be implemented by software. When being implemented by the hardware, the processor may be a logic circuit, an integrated circuit, or the like. When being implemented by the software, the processor may be a general-purpose processor. When being implemented by reading software code stored in a memory, the memory may be integrated into the processor, or may exist independently outside the processor.

It should be understood that first, second, third, fourth, and various serial numbers in this specification are merely used for distinction for ease of description, but are not intended to limit the scope of the embodiments of this application.

Terminologies such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As shown in figures, both a computing device and an application that is run on the computing device may be components. One or more components may reside within a process and/or an execution thread, and the components may be located on one computer and/or distributed between two or more computers. In addition, these components may be executed from various computer-readable media that store various data structures. For example, the components may perform, by using a local process and/or a remote process, communication based on a signal having one or more data packets (for example, data from two components interacting with another component in a local system, a distributed system, and/or across a network such as the Internet interacting with another system by using a signal).

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In addition, the terms "system" and "network" in this specification may be often used interchangeably in this specification. The term "and/or" in this specification describes only an association relationship for describing associated objects and represents that three relationships may exist. For example, A and/or B may represent the following three cases: only A exists, both A and B exist, and only B exists. In addition, the character "/" in this specification usually indicates an "or" relationship between the associated objects.

It should be understood that in the embodiments of this application, "B corresponding to A" indicates that B is associated with A, and B may be determined according to A. However, it should further be understood that determining B according to A does not mean that B is determined according to A only. B may be alternatively determined according to A and/or other information.

A person of ordinary skill in the art may be aware that, in combination with the embodiments disclosed in this specification, units and algorithm steps in the examples can be implemented by electronic hardware, computer software, or a combination thereof. To clearly describe the interchangeability between hardware and software, the foregoing has generally described compositions and steps of each example based on functions. Whether the functions are performed by hardware or software depends on a particular application and a design constraint condition of a technical solution. A person skilled in the art may use different methods to implement the described functions for each particular application, but it should not be considered that the implementation goes beyond the scope of this application.

It may be clearly understood by the person skilled in the art that, for convenience and brevity of description, for specific working processes of the system, apparatus, and unit described above, refer to corresponding processes in the foregoing method embodiments. Details are not described herein again.

In the several embodiments provided in this application, it should be understood that, the disclosed system, apparatus, and method may be implemented in other manners. For example, the described apparatus embodiment is merely an example. For example, the unit division is merely logical function division. There may be another division manner in actual implementation. For example, a plurality of units or components may be combined or integrated into another system, or some features may be ignored or not performed. In addition, displayed or discussed mutual couplings or direct couplings or communication connections may be indirect couplings or communication connections using some interfaces, apparatuses, or units, and may be connections in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of the embodiments in this application.

In addition, functional units in the embodiments of this application may be integrated into one processing unit, or each of the units may exist alone physically, or two or more units may be integrated into one unit. The integrated units may be implemented in a form of hardware, or may be implemented in a form of a software functional unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in the computer-readable medium. The computer-readable medium includes a computer storage medium and a communications medium, and the communications medium includes any medium that facilitates transmission of a computer program from one place to another. The storage medium may be any available medium accessible to a computer. The following provides an example but does not impose any limitation: The computer-readable medium may include a RAM, a ROM, an EEPROM, a CD-ROM or another optical disc storage, a magnetic disk storage medium or another magnetic storage device, or any other medium that can carry or store expected program code in a form of an instruction or a data structure and is accessible to a computer. In addition, any connection may be appropriately defined as a computer-readable medium. For example, if software is transmitted from a website, a server, or another remote source by using a coaxial cable, an optical fiber/cable, a twisted pair, a digital subscriber line (DSL), or wireless technologies such as infrared, radio, and microwave, the coaxial cable, the optical fiber/cable, the twisted pair, the DSL, or the wireless technologies such as the infrared, the radio, and the microwave are included in fixation of a medium to which they belong. A disk (Disk) and a disc (disc) used in this application includes a compact disc (CD), a laser disc, an optical disc, a digital versatile disc (DVD), a floppy disk, and a Blu-ray disc. The disk usually copies data in a magnetic manner, but the disc copies data optically by using a laser. The foregoing combination should also be included in the protection scope of the computer-readable medium.

In summary, the foregoing descriptions are merely example embodiments of the technical solutions of this application, but are not intended to limit the protection scope of this application. The scope of protection is defined by the claims.

## Claims

1. A password reset method, applied to a system comprising a requester(3800,4000) and a verifier(3700,3900), wherein the requester needs to request, by using an account and a password, the verifier(3700,3900) to verify an identity, and the method comprises:
receiving, by the verifier(3700,3900), an account sent by the requester(3800,4000) for requesting password reset; and
when determining that the account is a valid account, sending, by the verifier(3700,3900), first confirmation information to the requester(3800,4000), wherein the first confirmation information is used to enable the requester(3800,4000) to display, to a user, first binding information associated with the account, and request the user to determine whether to send verification information to a first communication address associated with the account, and the first binding information is information that corresponds to the account and that is known by the user; the method **characterized in that**:
when determining that the account is an invalid account, generating, by the verifier(3700,3900) based on the account, second binding information corresponding to the account, and sending, to the requester(3800,4000), second confirmation information having a same form as the first confirmation information, wherein the second confirmation information is used to enable the requester(3800,4000) to display the second binding information to the user, and request the user to determine whether to send verification information to a second communication address corresponding to the account, and the second binding information and the first binding information have a same form.

2. The method according to claim 1, wherein
the first binding information is the first communication address; and
the second binding information is the second communication address.

3. The method according to claim 1 or 2, wherein the method further comprises:
obtaining, by the verifier(3700,3900), a message that is sent by the requester(3800,4000) and that indicates that the user determines to send the verification information; and
when the account is the valid account, sending, by the verifier(3700,3900), the verification information to the first communication address, and sending a first response message to the requester(3800,4000), wherein the first response message is used to prompt the user that the verifier(3700,3900) has sent the verification information to the first communication address; or
when the account is the invalid account, directly sending, by the verifier(3700,3900) to the requester(3800,4000), a second response message having a same form as the first response message, wherein the second response message is used to prompt the user that the verifier(3700,3900) has sent the verification information to the second communication address.

4. The method according to any one of claims 1 to 3, wherein
in addition to being used to enable the requester(3800,4000) to display, to the user, the first binding information associated with the account, and request the user to determine whether to send the verification information to the first communication address associated with the account, the first confirmation information is further used to enable the requester(3800,4000) to display, to the user, third binding information associated with the account, and the third binding information is information that corresponds to the account and that is known by the user; and
in addition to being used to enable the requester(3800,4000) to display, to the user, the second binding information associated with the account, and request the user to determine whether to send the verification information to the second communication address, the second confirmation information is further used to enable the requester(3800,4000) to display, to the user, fourth binding information corresponding to the account, and the fourth binding information is information that is generated by the verifier(3700,3900) and that has a same form as the third binding information.

5. The method according to any one of claims 1 to 4, wherein the generating, by the verifier(3700,3900) based on the account, second binding information corresponding to the account when determining that the account is an invalid account comprises:
generating, by the verifier(3700,3900) based on the account and a first key, the second binding information corresponding to the account.

6. The method according to claim 2, wherein
the first communication address and the second communication address are anonymous information;
the first confirmation information is specifically used to enable the requester(3800,4000) to request the user to determine whether to send the verification information to the first communication address associated with the account, and enable the requester(3800,4000) to request the user to enter an anonymous part of the first communication address; and
the second confirmation information is specifically used to enable the requester(3800,4000) to request the user to determine whether to send the verification information to the second communication address associated with the account, and enable the requester(3800,4000) to request the user to enter an anonymous part of the second communication address.

7. The method according to claim 6, wherein the method further comprises:
obtaining, by the verifier(3700,3900), a message that is sent by the requester(3800,4000) and that indicates that the user determines to send the verification information, wherein the message that indicates that the user determines to send the verification information carries the anonymous part entered by the user; and
when the account is the valid account and the anonymous part entered by the user is correct, sending, by the verifier(3700,3900), the verification information to the first communication address, and sending a fourth response message to the requester(3800,4000), wherein the fourth response message is used to enable the requester(3800,4000) to prompt the user that the verifier(3700,3900) has sent the verification information to the first communication address; or
when the account is the invalid account or the anonymous part entered by the user is incorrect, directly sending, by the verifier(3700,3900) to the requester(3800,4000), a fifth response message having a same form as the fourth response message, wherein the fifth response message is used to enable the requester(3800,4000) to prompt the user that the verifier(3700,3900) has sent the verification information to the second communication address.

8. A verifier apparatus(3700), applied to a system comprising a requester apparatus(3800) and the verifier apparatus(3700), wherein the requester apparatus(3800) needs to request, by using an account and a password, the verifier apparatus(3700) to verify an identity, and the verifier apparatus(3700) comprises:
a processing unit(3710) and a transceiver unit(3720), wherein
the transceiver unit(3720) is configured to receive an account sent by the requester apparatus(3800) for requesting password reset; and
when it is determined that the account is a valid account, the transceiver unit(3720) is further configured to send first confirmation information to the requester apparatus(3800), wherein the first confirmation information is used to enable the requester apparatus(3800) to display, to a user, first binding information associated with the account, and request the user to determine whether to send verification information to a first communication address associated with the account, and the first binding information is information that corresponds to the account and that is known by the user; the verifier apparatus **characterized in that**:
when it is determined that the account is an invalid account, the processing unit(3710) is configured to generate, based on the account, second binding information corresponding to the account, and the transceiver unit(3720) is further configured to send, to the requester apparatus(3800), second confirmation information having a same form as the first confirmation information, wherein the second confirmation information is used to enable the requester apparatus(3800) to display the second binding information to the user, and request the user to determine whether to send verification information to a second communication address corresponding to the account, and the second binding information and the first binding information have a same form.

9. The verifier apparatus(3700) according to claim 8, wherein
the first binding information is the first communication address; and
the second binding information is the second communication address.

10. The verifier apparatus(3700) according to claim 8 or 9, wherein the transceiver unit(3720) is further configured to:
obtain a message that is sent by the requester apparatus(3800) and that indicates that the user determines to send the verification information; and
when the account is the valid account, send the verification information to the first communication address, and send a first response message to the requester apparatus(3800), wherein the first response message is used to prompt the user that the verifier apparatus(3700) has sent the verification information to the first communication address; or
when the account is the invalid account, directly send, to the requester apparatus, a second response message having a same form as the first response message, wherein the second response message is used to prompt the user that the verifier apparatus has sent the verification information to the second communication address.

11. The verifier apparatus(3700) according to any one of claims 8 to 10, wherein in addition to being used to enable the requester apparatus(3800) to display, to the user, the first binding information associated with the account, and request the user to determine whether to send the verification information to the first communication address associated with the account, the first confirmation information is further used to enable the requester apparatus(3800) to display, to the user, third binding information associated with the account, and the third binding information is information that corresponds to the account and that is known by the user; and
in addition to being used to enable the requester apparatus(3800) to display, to the user, the second binding information associated with the account, and request the user to determine whether to send the verification information to the second communication address, the second confirmation information is further used to enable the requester apparatus(3800) to display, to the user, fourth binding information corresponding to the account, and the fourth binding information is information that is generated by the processing unit(3710) and that has a same form as the third binding information.

12. The verifier apparatus(3700) according to any one of claims 8 to 11, wherein when it is determined that the account is the invalid account, the processing unit(3710) is specifically configured to generate, based on the account and a first key, the second binding information corresponding to the account.

13. The verifier apparatus(3700) according to claim 9, wherein
the first communication address and the second communication address are anonymous information;
the first confirmation information is specifically used to enable the requester apparatus(3800) to request the user to determine whether to send the verification information to the first communication address associated with the account, and enable the requester apparatus(3800) to request the user to enter an anonymous part of the first communication address; and
the second confirmation information is specifically used to enable the requester apparatus(3800) to request the user to determine whether to send the verification information to the second communication address associated with the account, and enable the requester apparatus(3800) to request the user to enter an anonymous part of the second communication address.

14. The verifier apparatus(3700) according to claim 13, wherein the transceiver unit(3720) is further configured to:
obtain a message that is sent by the requester apparatus(3800) and that indicates that the user determines to send the verification information, wherein the message that indicates that the user determines to send the verification information carries the anonymous part entered by the user; and
when the account is the valid account and the anonymous part entered by the user is correct, send the verification information to the first communication address, and send a fourth response message to the requester apparatus(3800), wherein the fourth response message is used to enable the requester apparatus(3800) to prompt the user that the verifier apparatus(3700) has sent the verification information to the first communication address; or
when the account is the invalid account or the anonymous part entered by the user is incorrect, directly send, to the requester apparatus(3800), a fifth response message having a same form as the fourth response message, wherein the fifth response message is used to enable the requester apparatus(3800) to prompt the user that the verifier apparatus(3700) has sent the verification information to the second communication address.

15. A password reset system, comprising a verifier apparatus(3700,3900) and a requester apparatus(3800,4000), wherein the verifier apparatus(3700,3900) is configured to perform the method according to any one of claims 1-7.

## Patentansprüche

1. Passwortrücksetzverfahren, das auf ein System angewandt wird, das einen Anforderer (3800, 4000) und einen Verifizierer (3700, 3900) umfasst, wobei der Anforderer unter Verwendung eines Kontos und eines Passworts den Verifizierer (3700, 3900) auffordern muss, eine Identität zu verifizieren, und wobei das Verfahren Folgendes umfasst:
Empfangen durch den Verifizierer (3700, 3900) eines Kontos, das durch den Anforderer (3800, 4000) zum Anfordern einer Passwortrücksetzung gesendet wird; und
wenn bestimmt wird, dass das Konto ein gültiges Konto ist, Senden durch den Verifizierer (3700, 3900) erster Bestätigungsinformationen zu dem Anforderer (3800, 4000), wobei die ersten Bestätigungsinformationen verwendet werden, um dem Anforderer (3800, 4000) zu ermöglichen, für einen Anwender erste Bindungsinformationen, die dem Konto zugeordnet sind, anzuzeigen und den Anwender aufzufordern zu bestimmen, ob Verifizierungsinformationen zu einer ersten Kommunikationsadresse, die dem Konto zugeordnet ist, zu senden sind, und die ersten Bindungsinformationen Informationen sind, die dem Konto entsprechen und die dem Anwender bekannt sind; wobei das Verfahren **dadurch gekennzeichnet ist, dass**:
wenn bestimmt wird, dass das Konto ein ungültiges Konto ist, Erzeugen, durch den Verifizierer (3700, 3900) basierend auf dem Konto, zweiter Bindungsinformationen, die dem Konto entsprechen, und Senden zu dem Anforderer (3800, 4000) zweiter Bestätigungsinformationen, die eine gleiche Form wie die ersten Bestätigungsinformationen aufweisen, wobei die zweiten Bestätigungsinformationen verwendet werden, um dem Anforderer (3800, 4000) zu ermöglichen, die zweiten Bindungsinformationen für den Anwender anzuzeigen und den Anwender aufzufordern zu bestimmen, ob Verifizierungsinformationen zu einer zweiten Kommunikationsadresse, die dem Konto entspricht, zu senden sind und die zweiten Bindungsinformationen und die ersten Bindungsinformationen eine gleiche Form aufweisen.

2. Verfahren nach Anspruch 1, wobei
die ersten Bindungsinformationen die erste Kommunikationsadresse sind; und
die zweiten Bindungsinformationen die zweite Kommunikationsadresse sind.

3. Verfahren nach Anspruch 1 oder 2, wobei das Verfahren ferner Folgendes umfasst:
Erhalten durch den Verifizierer (3700, 3900) einer Nachricht, die durch den Anforderer (3800, 4000) gesendet wird und die angibt, dass der Anwender bestimmt, die Verifizierungsinformationen zu senden; und
wenn das Konto das gültige Konto ist, Senden durch den Verifizierer (3700, 3900) der Verifizierungsinformationen zu der ersten Kommunikationsadresse und Senden einer ersten Antwortnachricht zu dem Anforderer (3800, 4000), wobei die erste Antwortnachricht verwendet wird, um dem Anwender mitzuteilen, dass der Verifizierer (3700, 3900) die Verifizierungsinformationen zu der ersten Kommunikationsadresse gesendet hat; oder
wenn das Konto das ungültige Konto ist, direktes Senden durch den Verifizierer (3700, 3900) zu dem Anforderer (3800,4000) einer zweiten Antwortnachricht, die eine gleiche Form wie die erste Antwortnachricht aufweist, wobei die zweite Antwortnachricht verwendet wird, um dem Anwender mitzuteilen, dass der Verifizierer (3700, 3900) die Verifizierungsinformationen zu der zweiten Kommunikationsadresse gesendet hat.

4. Verfahren nach einem der Ansprüche 1 bis 3, wobei
zusätzlich dazu, dass sie verwendet werden, um dem Anforderer (3800, 4000) zu ermöglichen, dem Anwender die ersten Bindungsinformationen, die dem Konto zugeordnet sind, anzuzeigen und den Anwender aufzufordern zu bestimmen, ob die Verifizierungsinformationen zu der ersten Kommunikationsadresse, die dem Konto zugeordnet ist, zu senden sind, die ersten Bestätigungsinformationen ferner verwendet werden, dem Anforderer (3800, 4000) zu ermöglichen, für den Anwender dritte Bindungsinformationen, die dem Konto zugeordnet sind, anzuzeigen, und die dritten Bindungsinformationen Informationen sind, die dem Konto entsprechen und die dem Anwender bekannt sind; und
zusätzlich dazu, dass sie verwendet werden, um dem Anforderer (3800, 4000) zu ermöglichen, dem Anwender die zweiten Bindungsinformationen, die dem Konto zugeordnet sind, anzuzeigen und den Anwender aufzufordern zu bestimmen, ob die Verifizierungsinformationen zu der zweiten Kommunikationsadresse zu senden sind, die zweiten Bestätigungsinformationen ferner verwendet werden, um dem Anforderer (3800, 4000) zu ermöglichen, dem Anwender vierte Bindungsinformationen, die dem Konto zugeordnet sind, anzuzeigen, und die vierten Bindungsinformationen Informationen sind, die durch den Verifizierer (3700, 3900) erzeugt werden und die eine gleiche Form wie die dritten Bindungsinformationen aufweisen.

5. Verfahren nach einem der Ansprüche 1 bis 4, wobei das Erzeugen, durch den Verifizierer (3700, 3900) basierend auf dem Konto, zweiter Bindungsinformationen, die dem Konto entsprechen, wenn bestimmt wird, dass das Konto ein ungültiges Konto ist, Folgendes umfasst:
Erzeugen durch den Verifizierer (3700, 3900) basierend auf dem Konto und einem ersten Schlüssel der zweiten Bindungsinformationen, die dem Konto entsprechen.

6. Verfahren nach Anspruch 2, wobei
die erste Kommunikationsadresse und die zweite Kommunikationsadresse anonyme Informationen sind;
die ersten Bestätigungsinformationen insbesondere verwendet werden, um dem Anforderer (3800, 4000) zu ermöglichen, den Anwender aufzufordern zu bestimmen, ob die Verifizierungsinformationen zu der ersten Kommunikationsadresse, die dem Konto zugeordnet ist, zu senden sind, und dem Anforderer (3800, 4000) zu ermöglichen, den Anwender aufzufordern, einen anonymen Teil der ersten Kommunikationsadresse einzugeben; und
die zweiten Bestätigungsinformationen insbesondere verwendet werden, um dem Anforderer (3800, 4000) zu ermöglichen, den Anwender aufzufordern zu bestimmen, ob die Verifizierungsinformationen zu der zweiten Kommunikationsadresse, die dem Konto zugeordnet ist, zu senden sind, und dem Anforderer (3800, 4000) zu ermöglichen, den Anwender aufzufordern, einen anonymen Teil der zweiten Kommunikationsadresse einzugeben.

7. Verfahren nach Anspruch 6, wobei das Verfahren ferner Folgendes umfasst:
Erhalten durch den Verifizierer (3700, 3900) einer Nachricht, die durch den Anforderer (3800, 4000) gesendet wird und die angibt, dass der Anwender bestimmt, die Verifizierungsinformationen zu senden, wobei die Nachricht, die angibt, dass der Anwender bestimmt, die Verifizierungsinformationen zu senden, den durch den Anwender eingegebenen anonymen Teil führt; und
wenn das Konto das gültige Konto ist und der durch den Anwender eingegebene anonyme Teil korrekt ist, Senden durch den Verifizierer (3700, 3900) der Verifizierungsinformationen zu der ersten Kommunikationsadresse und Senden einer vierten Antwortnachricht zu dem Anforderer (3800, 4000), wobei die vierte Antwortnachricht verwendet wird, um dem Anforderer (3800, 4000) zu ermöglichen, dem Anwender mitzuteilen, dass der Verifizierer (3700, 3900) die Verifizierungsinformationen zu der ersten Kommunikationsadresse gesendet hat; oder wenn das Konto das ungültige Konto ist oder der durch den Anwender eingegebene anonyme Teil nicht korrekt ist, direktes Senden durch den Verifizierer (3700, 3900) zu dem Anforderer (3800, 4000) einer fünften Antwortnachricht, die eine gleiche Form wie die vierte Antwortnachricht aufweist, wobei die fünfte Antwortnachricht verwendet wird, um dem Anforderer (3800, 4000) zu ermöglichen, dem Anwender mitzuteilen, dass der Verifizierer (3700, 3900) die Verifizierungsinformationen zu der zweiten Kommunikationsadresse gesendet hat.

8. Verifizierereinrichtung (3700), die auf ein System angewandt wird, das eine Anforderereinrichtung (3800) und die Verifizierereinrichtung (3700) umfasst, wobei die Anforderereinrichtung (3800) unter Verwendung eines Kontos und eines Passworts die Verifizierereinrichtung (3700) auffordern muss, eine Identität zu verifizieren, und wobei die Verifizierereinrichtung (3700) Folgendes umfasst:
eine Verarbeitungseinheit (3710), und eine Sender/Empfängereinheit (3720), wobei die Sender/Empfängereinheit (3720) konfiguriert ist, ein durch die Anforderereinrichtung (3800) gesendetes Konto zum Anfordern einer Passwortrücksetzung zu empfangen; und
wenn bestimmt wird, dass das Konto ein gültiges Konto ist, die Sender/Empfängereinheit (3720) ferner konfiguriert ist, erste Bestätigungsinformationen zu der Anforderereinrichtung (3800) zu senden, wobei die ersten Bestätigungsinformationen verwendet werden, um der Anforderereinrichtung (3800) zu ermöglichen, für einen Anwender erste Bindungsinformationen, die dem Konto zugeordnet sind, anzuzeigen und den Anwender aufzufordern zu bestimmen, ob Verifizierungsinformationen zu einer ersten Kommunikationsadresse, die dem Konto zugeordnet ist, zu senden sind, und die ersten Bindungsinformationen Informationen sind, die dem Konto entsprechen und die dem Anwender bekannt sind, wobei die Verifizierereinrichtung **dadurch gekennzeichnet ist, dass**:
wenn bestimmt wird, dass das Konto ein ungültiges Konto ist, die Verarbeitungseinheit (3710) konfiguriert ist, basierend auf dem Konto zweite Bindungsinformationen, die dem Konto entsprechen, zu erzeugen, und die Sender/Empfängereinheit (3720) ferner konfiguriert ist, zu der Anforderereinrichtung (3800) zweite Bestätigungsinformationen, die eine gleiche Form wie die ersten Bestätigungsinformationen aufweisen, zu senden, wobei die zweiten Bestätigungsinformationen verwendet werden, um der Anforderereinrichtung (3800) zu ermöglichen, die zweiten Bindungsinformationen für den Anwender anzuzeigen und den Anwender aufzufordern zu bestimmen, ob Verifizierungsinformationen zu einer zweiten Kommunikationsadresse, die dem Konto entspricht, zu senden sind, und
die zweiten Bindungsinformationen und die ersten Bindungsinformationen eine gleiche Form aufweisen.

9. Verifizierereinrichtung(3700) nach Anspruch 8, wobei
die ersten Bindungsinformationen die erste Kommunikationsadresse sind; und
die zweiten Bindungsinformationen die zweite Kommunikationsadresse sind.

10. Verifizierereinrichtung (3700) nach Anspruch 8 oder 9, wobei die Sender/Empfängereinheit (3720) ferner konfiguriert ist zum:
Erhalten einer Nachricht, die durch die Anforderereinrichtung (3800) gesendet wird und die angibt, dass der Anwender bestimmt, die Verifizierungsinformationen zu senden; und
wenn das Konto das gültige Konto ist, Senden der Verifizierungsinformationen zu der ersten Kommunikationsadresse und Senden einer ersten Antwortnachricht zu der Anforderereinrichtung (3800), wobei die erste Antwortnachricht verwendet wird, um dem Anwender mitzuteilen, dass die Verifizierereinrichtung (3700) die Verifizierungsinformationen zu der ersten Kommunikationsadresse gesendet hat; oder
wenn das Konto das ungültige Konto ist, direktes Senden zu der Anforderereinrichtung einer zweiten Antwortnachricht, die eine gleiche Form wie die erste Antwortnachricht aufweist, wobei die zweite Antwortnachricht verwendet wird, um dem Anwender mitzuteilen, dass die Verifizierereinrichtung die Verifizierungsinformationen zu der zweiten Kommunikationsadresse gesendet hat.

11. Verifizierereinrichtung (3700) nach einem der Ansprüche 8 bis 10, wobei zusätzlich dazu, dass sie verwendet werden, um der Anforderereinrichtung (3800) zu ermöglichen, dem Anwender die ersten Bindungsinformationen, die dem Konto zugeordnet sind, anzuzeigen und den Anwender aufzufordern zu bestimmen, ob die Verifizierungsinformationen zu der ersten Kommunikationsadresse, die dem Konto zugeordnet ist, zu senden sind, die ersten Bestätigungsinformationen ferner verwendet werden, der Anforderereinrichtung (3800) zu ermöglichen, für den Anwender dritte Bindungsinformationen, die dem Konto zugeordnet sind, anzuzeigen, und die dritten Bindungsinformationen Informationen sind, die dem Konto entsprechen und die dem Anwender bekannt sind; und
zusätzlich dazu, dass sie verwendet werden, um der Anforderereinrichtung (3800) zu ermöglichen, dem Anwender die zweiten Bindungsinformationen, die dem Konto zugeordnet sind, anzuzeigen und den Anwender aufzufordern zu bestimmen, ob die Verifizierungsinformationen zu der zweiten Kommunikationsadresse zu senden sind, die zweiten Bestätigungsinformationen ferner verwendet werden, um der Anforderereinrichtung (3800) zu ermöglichen, dem Anwender vierte Bindungsinformationen, die dem Konto zugeordnet sind, anzuzeigen, und die vierten Bindungsinformationen Informationen sind, die durch die Verarbeitungseinheit (3710) erzeugt werden und die eine gleiche Form wie die dritten Bindungsinformationen aufweisen.

12. Verifizierereinrichtung (3700) nach einem der Ansprüche 8 bis 11, wobei dann, wenn bestimmt wird, dass das Konto das ungültige Konto ist, die Verarbeitungseinheit (3710) insbesondere konfiguriert ist, basierend auf dem Konto und einem ersten Schlüssel die zweiten Bindungsinformationen, die dem Konto entsprechen, zu erzeugen.

13. Verifizierereinrichtung (3700) nach Anspruch 9, wobei
die erste Kommunikationsadresse und die zweite Kommunikationsadresse anonyme Informationen sind;
die ersten Bestätigungsinformationen insbesondere verwendet werden, um der Anforderereinrichtung (3800) zu ermöglichen, den Anwender aufzufordern zu bestimmen, ob die Verifizierungsinformationen zu der ersten Kommunikationsadresse, die dem Konto zugeordnet ist, zu senden sind, und der Anforderereinrichtung (3800) zu ermöglichen, den Anwender aufzufordern, einen anonymen Teil der ersten Kommunikationsadresse einzugeben; und
die zweiten Bestätigungsinformationen insbesondere verwendet werden, um der Anforderereinrichtung(3800) zu ermöglichen, den Anwender aufzufordern zu bestimmen, ob die Verifizierungsinformationen zu der zweiten Kommunikationsadresse, die dem Konto zugeordnet ist, zu senden sind, und der Anforderereinrichtung (3800) zu ermöglichen, den Anwender aufzufordern, einen anonymen Teil der zweiten Kommunikationsadresse einzugeben.

14. Verifizierereinrichtung (3700) nach Anspruch 13, wobei die Sender/Empfängereinheit (3720) ferner konfiguriert ist zum:
Erhalten einer Nachricht, die durch die Anforderereinrichtung (3800) gesendet wird und die angibt, dass der Anwender bestimmt, die Verifizierungsinformationen zu senden, wobei die Nachricht, die angibt, dass der Anwender bestimmt, die Verifizierungsinformationen zu senden, den durch den Anwender eingegebenen anonymen Teil führt; und
wenn das Konto das gültige Konto ist und der durch den Anwender eingegebene anonyme Teil korrekt ist, Senden der Verifizierungsinformationen zu der ersten Kommunikationsadresse und Senden einer vierten Antwortnachricht zu der Anforderereinrichtung (3800), wobei die vierte Antwortnachricht verwendet wird, um der Anforderereinrichtung (3800) zu ermöglichen, dem Anwender mitzuteilen, dass die Verifizierereinrichtung (3700) die Verifizierungsinformationen zu der ersten Kommunikationsadresse gesendet hat; oder
wenn das Konto das ungültige Konto ist oder der durch den Anwender eingegebene anonyme Teil nicht korrekt ist, direktes Senden zu der Anforderereinrichtung (3800) einer fünften Antwortnachricht, die eine gleiche Form wie die vierte Antwortnachricht aufweist, wobei die fünfte Antwortnachricht verwendet wird, um der Anforderereinrichtung (3800) zu ermöglichen, dem Anwender mitzuteilen, dass die Verifizierereinrichtung (3700) die Verifizierungsinformationen zu der zweiten Kommunikationsadresse gesendet hat.

15. Passwortrücksetzungssystem, das eine Verifizierereinrichtung (3700, 3900) und eine Anforderereinrichtung (3800, 4000) umfasst, wobei die Verifizierereinrichtung (3700, 3900) konfiguriert ist, das Verfahren nach einem der Ansprüche 1-7 auszuführen.

## Revendications

1. Procédé de réinitialisation de mot de passe, appliqué à un système comprenant un module de demande (3800, 4000) et un module de vérification (3700, 3900), le module de demande devant demander, au moyen d'un compte et d'un mot de passe, au module de vérification (3700, 3900) de vérifier une identité, et le procédé comprenant les étapes consistant à :
recevoir, par le module de vérification (3700, 3900), un compte envoyé par le module de demande (3800, 4000) pour demander une réinitialisation de mot de passe ; et
quand il est déterminé que le compte est un compte valide, envoyer, par le module de vérification (3700, 3900), une première information de confirmation au module de demande (3800, 4000), la première information de confirmation étant utilisée pour permettre au module de demande (3800, 4000) d'afficher, pour un utilisateur, une première information de liaison associée au compte et pour demander à l'utilisateur de déterminer s'il faut envoyer une information de vérification à une première adresse de communication associée au compte, et la première information de liaison étant une information qui correspond au compte et qui est connue par l'utilisateur ; le procédé consistant à :
quand il est déterminé que le compte est un compte non valide, générer, par le module de vérification (3700, 3900) sur la base du compte, une deuxième information de liaison correspondant au compte et envoyer, au module de demande (3800, 4000), une seconde information de confirmation ayant une même forme que la première information de confirmation, la seconde information de confirmation étant utilisée pour permettre au module de demande (3800, 4000) d'afficher la deuxième information de liaison pour l'utilisateur et pour demander à l'utilisateur de déterminer s'il faut envoyer une information de vérification à une seconde adresse de communication correspondant au compte, et la deuxième information de liaison et la première information de liaison ayant une même forme.

2. Procédé selon la revendication 1, dans lequel :
la première information de liaison est la première adresse de communication ; et
la deuxième information de liaison est la seconde adresse de communication.

3. Procédé selon la revendication 1 ou 2, le procédé comprenant en outre les étapes consistant à :
obtenir, par le module de vérification (3700, 3900), un message qui est envoyé par le module de demande (3800, 4000) et qui indique que l'utilisateur détermine qu'il faut envoyer l'information de vérification ; et
quand le compte est le compte valide, envoyer, par le module de vérification (3700, 3900), l'information de vérification à la première adresse de communication et envoyer un premier message de réponse au module de demande (3800, 4000), le premier message de réponse étant utilisé pour indiquer à l'utilisateur que le module de vérification (3700, 3900) a envoyé l'information de vérification à la première adresse de communication ; ou
quand le compte est le compte non valide, envoyer directement, par le module de vérification (3700, 3900), au module de demande (3800, 4000), un deuxième message de réponse ayant une même forme que le premier message de réponse, le deuxième message de réponse étant utilisé pour indiquer à l'utilisateur que le module de vérification (3700, 3900) a envoyé l'information de vérification à la seconde adresse de communication.

4. Procédé selon l'une quelconque des revendications 1 et 3, dans lequel :
en plus d'être utilisée pour permettre au module de demande (3800, 4000) d'afficher, pour l'utilisateur, la première information de liaison associée au compte et pour demander à l'utilisateur de déterminer s'il faut envoyer l'information de vérification à la première adresse de communication associée au compte, la première information de confirmation est en outre utilisée pour permettre au module de demande (3800, 4000) d'afficher, pour l'utilisateur, une troisième information de liaison associée au compte, et la troisième information de liaison étant une information qui correspond au compte et qui est connue par l'utilisateur ; et
en plus d'être utilisée pour permettre au module de demande (3800, 4000) d'afficher, pour l'utilisateur, la deuxième information de liaison associée au compte et pour demander à l'utilisateur de déterminer s'il faut envoyer l'information de vérification à la seconde adresse de communication, la seconde information de confirmation est en outre utilisée pour permettre au module de demande (3800, 4000) d'afficher, pour l'utilisateur, une quatrième information de liaison correspondant au compte, et la quatrième information de liaison étant une information qui est générée par le module de vérification (3700, 3900) et qui a une même forme que la troisième information de liaison.

5. Procédé selon l'une quelconque des revendications 1 à 4, dans lequel la génération, par le module de vérification (3700, 3900) sur la base du compte, d'une deuxième information de liaison correspondant au compte quand il est déterminé que le compte est un compte non valide comprend l'étape consistant à :
générer, par le module de vérification (3700, 3900) sur la base du compte et d'une première clé, la deuxième information de liaison correspondant au compte.

6. Procédé selon la revendication 2, dans lequel :
la première adresse de communication et la seconde adresse de communication sont des informations anonymes ;
la première information de confirmation est utilisée spécifiquement pour permettre au module de demande (3800, 4000) de demander à l'utilisateur de déterminer s'il faut envoyer l'information de vérification à la première adresse de communication associée au compte et pour permettre au module de demande (3800, 4000) de demander à l'utilisateur d'entrer une partie anonyme de la première adresse de communication ; et
la seconde information de confirmation est utilisée spécifiquement pour permettre au module de demande (3800, 4000) de demander à l'utilisateur de déterminer s'il faut envoyer l'information de vérification à la seconde adresse de communication associée au compte et pour permettre au module de demande (3800, 4000) de demander à l'utilisateur d'entrer une partie anonyme de la seconde adresse de communication.

7. Procédé selon la revendication 6, le procédé comprenant en outre les étapes consistant à :
obtenir, par le module de vérification (3700, 3900), un message qui est envoyé par le module de demande (3800, 4000) et qui indique que l'utilisateur détermine qu'il faut envoyer l'information de vérification, le message qui indique que l'utilisateur détermine qu'il faut envoyer l'information de vérification transportant la partie anonyme entrée par l'utilisateur ; et
quand le compte est le compte valide et que la partie anonyme entrée par l'utilisateur est correcte, envoyer, par le module de vérification (3700, 3900), l'information de vérification à la première adresse de communication et envoyer un quatrième message de réponse au module de demande (3800, 4000), le quatrième message de réponse étant utilisé pour permettre au module de demande (3800, 4000) d'indiquer à l'utilisateur que le module de vérification (3700, 3900) a envoyé l'information de vérification à la première adresse de communication ; ou
quand le compte est le compte non valide ou que la partie anonyme entrée par l'utilisateur est incorrecte, envoyer directement, par le module de vérification (3700, 3900), au module de demande (3800, 4000), un cinquième message de réponse ayant une même forme que le quatrième message de réponse, le cinquième message de réponse étant utilisé pour permettre au module de demande (3800, 4000) d'indiquer à l'utilisateur que le module de vérification (3700, 3900) a envoyé l'information de vérification à la seconde adresse de communication.

8. Appareil de vérification (3700) appliqué à un système comprenant un appareil de demande (3800) et l'appareil de vérification (3700), l'appareil de demande (3800) nécessitant de demander, au moyen d'un compte et d'un mot de passe, à l'appareil de vérification (3700) de vérifier une identité, et l'appareil de vérification (3700) comprenant :
une unité de traitement (3710) et une unité émettrice-réceptrice (3720),
l'unité émettrice-réceptrice (3720) étant configurée pour recevoir un compte envoyé par l'appareil de demande (3800) pour demander une réinitialisation de mot de passe ; et
quand il est déterminé que le compte est un compte valide, l'unité émettrice-réceptrice (3720) étant en outre configurée pour envoyer une première information de confirmation à l'appareil de demande (3800), la première information de confirmation étant utilisée pour permettre à l'appareil de demande (3800) d'afficher, pour un utilisateur, une première information de liaison associée au compte et pour demander à l'utilisateur de déterminer s'il faut envoyer une information de vérification à une première adresse de communication associée au compte, et la première information de liaison étant une information qui correspond au compte et qui est connue par l'utilisateur ; l'appareil de vérification étant **caractérisé en ce que** :
quand il est déterminé que le compte est un compte non valide, l'unité de traitement (3710) est configurée pour générer, sur la base du compte, une deuxième information de liaison correspondant au compte et l'unité émettrice-réceptrice (3720) est en outre configurée pour envoyer, à l'appareil de demande (3800), une seconde information de confirmation ayant une même forme que la première information de confirmation, la seconde information de confirmation étant utilisée pour permettre à l'appareil de demande (3800) d'afficher la deuxième information de liaison pour l'utilisateur et pour demander à l'utilisateur de déterminer s'il faut envoyer une information de vérification à une seconde adresse de communication correspondant au compte, et la deuxième information de liaison et la première information de liaison ayant une même forme.

9. Appareil de vérification (3700) selon la revendication 8, dans lequel :
la première information de liaison est la première adresse de communication ; et
la deuxième information de liaison est la seconde adresse de communication.

10. Appareil de vérification (3700) selon la revendication 8 ou 9, dans lequel l'unité émettrice-réceptrice (3720) est en outre configurée pour :
obtenir un message qui est envoyé par l'appareil de demande (3800) et qui indique que l'utilisateur détermine qu'il faut envoyer l'information de vérification ; et
quand le compte est le compte valide, envoyer l'information de vérification à la première adresse de communication et envoyer un premier message de réponse à l'appareil de demande (3800), le premier message de réponse étant utilisé pour indiquer à l'utilisateur que l'appareil de vérification (3700) a envoyé l'information de vérification à la première adresse de communication ; ou
quand le compte est le compte non valide, envoyer directement, à l'appareil de demande, un deuxième message de réponse ayant une même forme que le premier message de réponse, le deuxième message de réponse étant utilisé pour indiquer à l'utilisateur que l'appareil de vérification a envoyé l'information de vérification à la seconde adresse de communication.

11. Appareil de vérification (3700) selon l'une quelconque des revendications 8 à 10, dans lequel :
en plus d'être utilisée pour permettre à l'appareil de demande (3800) d'afficher, pour l'utilisateur, la première information de liaison associée au compte et pour demander à l'utilisateur de déterminer s'il faut envoyer l'information de vérification à la première adresse de communication associée au compte, la première information de confirmation est en outre utilisée pour permettre à l'appareil de demande (3800) d'afficher, pour l'utilisateur, une troisième information de liaison associée au compte, et la troisième information de liaison étant une information qui correspond au compte et qui est connue par l'utilisateur ; et
en plus d'être utilisée pour permettre à l'appareil de demande (3800) d'afficher, pour l'utilisateur, la deuxième information de liaison associée au compte et pour demander à l'utilisateur de déterminer s'il faut envoyer l'information de vérification à la seconde adresse de communication, la seconde information de confirmation est en outre utilisée pour permettre à l'appareil de demande (3800) d'afficher, pour l'utilisateur, une quatrième information de liaison correspondant au compte, et la quatrième information de liaison étant une information qui est générée par l'unité de traitement (3710) et qui a une même forme que la troisième information de liaison.

12. Appareil de vérification (3700) selon l'une quelconque des revendications 8 à 11, dans lequel, quand il est déterminé que le compte est le compte non valide, l'unité de traitement (3710) est spécifiquement configurée pour générer, sur la base du compte et d'une première clé, la deuxième information de liaison correspondant au compte.

13. Appareil de vérification (3700) selon la revendication 9, dans lequel :
la première adresse de communication et la seconde adresse de communication sont des informations anonymes ;
la première information de confirmation est utilisée spécifiquement pour permettre à l'appareil de demande (3800) de demander à l'utilisateur de déterminer s'il faut envoyer l'information de vérification à la première adresse de communication associée au compte et pour permettre à l'appareil de demande (3800) de demander à l'utilisateur d'entrer une partie anonyme de la première adresse de communication ; et
la seconde information de confirmation est utilisée spécifiquement pour permettre à l'appareil de demande (3800) de demander à l'utilisateur de déterminer s'il faut envoyer l'information de vérification à la seconde adresse de communication associée au compte et pour permettre à l'appareil de demande (3800) de demander à l'utilisateur d'entrer une partie anonyme de la seconde adresse de communication.

14. Appareil de vérification (3700) selon la revendication 13, dans lequel l'unité émettrice-réceptrice (3720) est en outre configurée pour :
obtenir un message qui est envoyé par l'appareil de demande (3800) et qui indique que l'utilisateur détermine qu'il faut envoyer l'information de vérification, le message qui indique que l'utilisateur détermine qu'il faut envoyer l'information de vérification transportant la partie anonyme entrée par l'utilisateur ; et
quand le compte est le compte valide et que la partie anonyme entrée par l'utilisateur est correcte, envoyer l'information de vérification à la première adresse de communication et envoyer un quatrième message de réponse à l'appareil de demande (3800), le quatrième message de réponse étant utilisé pour permettre à l'appareil de demande (3800) d'indiquer à l'utilisateur que l'appareil de vérification (3700) a envoyé l'information de vérification à la première adresse de communication ; ou
quand le compte est le compte non valide ou que la partie anonyme entrée par l'utilisateur est incorrecte, envoyer directement, à l'appareil de demande (3800), un cinquième message de réponse ayant une même forme que le quatrième message de réponse, le cinquième message de réponse étant utilisé pour permettre à l'appareil de demande (3800) d'indiquer à l'utilisateur que l'appareil de vérification (3700) a envoyé l'information de vérification à la seconde adresse de communication.

15. Système de réinitialisation de mot de passe, comprenant un appareil de vérification (3700, 3900) et un appareil de demande (3800, 4000), l'appareil de vérification (3700, 3900) étant configuré pour réaliser le procédé selon l'une quelconque des revendications 1 à 7.
